(19) Europäisches Patentamt / European Patent Office / Office européen des brevets

(11) EP 2 739 572 B1

(12) EUROPÄISCHE PATENTSCHRIFT

(45) Veröffentlichungstag und Bekanntmachung des Hinweises auf die Patenterteilung:
**01.03.2017 Patentblatt 2017/09**

(21) Anmeldenummer: **12740983.7**

(22) Anmeldetag: **31.07.2012**

(51) Int Cl.:
***C02F 1/26*** *(2006.01)* ***C02F 101/20*** *(2006.01)*

(86) Internationale Anmeldenummer:
**PCT/EP2012/064940**

(87) Internationale Veröffentlichungsnummer:
**WO 2013/017588 (07.02.2013 Gazette 2013/06)**

# (54) EXTRAKTION VON METALL(IONEN) MITTELS IONISCHER FLÜSSIGKEITEN

EXTRACTION OF METAL (IONS) BY MEANS OF IONIC LIQUIDS

EXTRACTION DE MÉTAUX (IONS) AU MOYEN DE LIQUIDES IONIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2011 DE 102011080230**

(43) Veröffentlichungstag der Anmeldung:
**11.06.2014 Patentblatt 2014/24**

(73) Patentinhaber:
- **Technische Universität Dresden 01069 Dresden (DE)**
- **Helmholtz-Zentrum Dresden - Rossendorf e.V. 01328 Dresden (DE)**

(72) Erfinder:
- **STRASSNER, Thomas 01156 Dresden (DE)**
- **SCHULZ, Tobias 51067 Köln (DE)**
- **BERNHARD, Gert 01239 Dresden (DE)**
- **RAFF, Johannes 01324 Dresden (DE)**
- **LEHMANN, Falk 01139 Dresden (DE)**

(74) Vertreter: **Glas, Holger**
**Maiwald Patentanwalts GmbH**
**Elisenhof**
**Elisenstrasse 3**
**80335 München (DE)**

(56) Entgegenhaltungen:
**WO-A1-2009/095012**
- **A. P. DE LOS RÍOS ET AL: "Removal of Metal Ions from Aqueous Solutions by Extraction with Ionic Liquids +", JOURNAL OF CHEMICAL & ENGINEERING DATA, Bd. 55, Nr. 2, 11. Februar 2010 (2010-02-11), Seiten 605-608, XP55040367, ISSN: 0021-9568, DOI: 10.1021/je9005008**
- **LISA FISCHER ET AL: "Ionic liquids for extraction of metals and metal containing compounds from communal and industrial waste water", WATER RESEARCH, ELSEVIER, AMSTERDAM, NL, Bd. 45, Nr. 15, 13. Juni 2011 (2011-06-13) , Seiten 4601-4614, XP028243792, ISSN: 0043-1354, DOI: 10.1016/J.WATRES.2011.06.011 [gefunden am 2011-06-21]**
- **LERTLAPWASIN R ET AL: "Ionic liquid extraction of heavy metal ions by 2-aminothiophenol in 1-butyl-3-methylimidazolium hexafluorophosphate and their association constants", SEPARATION AND PURIFICATION TECHNOLOGY, ELSEVIER SCIENCE, AMSTERDAM, NL, Bd. 72, Nr. 1, 30. März 2010 (2010-03-30), Seiten 70-76, XP026949500, ISSN: 1383-5866, DOI: 10.1016/J.SEPPUR.2010.01.004 [gefunden am 2010-01-18]**
- **A. RAJENDRAN ET AL: "Effective Extraction of Heavy Metals from their Effluents Using Some Potential Ionic Liquids as Green Chemicals", E-JOURNAL OF CHEMISTRY, Bd. 8, Nr. 2, 1. Januar 2011 (2011-01-01), Seiten 697-702, XP55040366, ISSN: 0973-4945, DOI: 10.1155/2011/202380**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- VISSER ANN E ET AL: "Task-specific ionic liquids incorporating novel cations for the coordination and extraction of Hg2+ and Cd2+: synthesis, characterization, and extraction studies", ENVIRONMENTAL SCIENCE AND TECHNOLOGY, AMERICAN CHEMICAL SOCIETY. EASTON, PA, US, Bd. 36, Nr. 11, 1. Juni 2002 (2002-06-01), Seiten 2523-2529, XP002510141, ISSN: 0013-936X, DOI: 10.1021/ES0158004 [gefunden am 2002-04-27]

## Beschreibung

Die Erfindung betrifft ein Verfahren zur Extraktion von Metallen, insbesondere Schwermetallen mittels ionischer Flüssigkeiten aus wässrigen Phasen.

Viele Abwässer von Krankenhäusern, Kläranlagen, metallverarbeitenden Betrieben, Kraftwerken, Lasur- und Farbenherstellern sowie sonstigen in diesem Bereich tätigen Firmen sind mit Schwermetallen bzw. mit toxischen oder radioaktiven Metallen versetzt und stark sauer. Ebenso können besagte Metalle in einer Vielzahl von Kühlwasserkreisläufen vorher genannter Betriebe nachgewiesen werden. Vor Einleitung in das Grundwasser müssen derartige Abwässer daher gereinigt werden, um eine Verunreinigung der Umwelt zu vermeiden.

Es ist im Stand der Technik bekannt, dass zur Aufreinigung bzw. Extraktion von wässrigen Lösungen ionische Flüssigkeiten eingesetzt werden können. Durch die vorteilhaften Eigenschaften der ionischen Flüssigkeiten, wie z.B. niedrige Dampfdrücke, geringe Entflammbarkeit und Brennbarkeit stellen sie ein ideales "grünes" Lösungsmittel für eine Vielzahl von chemischen Prozessen dar. Das Gebiet der ionischen Flüssigkeiten wird zurzeit intensiv erforscht, da die Anwendungsmöglichkeiten vielfältig sind. Ionische Flüssigkeiten werden beispielsweise zur Extraktion von Stoffen und Verbindungen aus Lösungen oder Festphasen verwendet. Dies ist z.B. in DE 10 2005 027 172 A1 beschrieben, wo ein Verfahren zur Extraktion von Proteinen, Proteinfragmenten und/oder Peptiden aus biologischen Proben gelehrt wird. Ein weiteres Beispiel stellt WO 03/070667 A1 dar, das ein Verfahren zur Flüssig-Flüssig-Extraktion oder Flüssig-Gas-Extraktion von Mischungen organischer Verbindungen betrifft, wobei eine oder mehrere Komponenten der Mischung wenigstens teilweise mit Hilfe einer ionische Flüssigkeit enthaltenden Phase extrahiert werden.

Ein weiteres Anwendungsgebiet von ionischen Flüssigkeiten ist die Extraktion von Metallen aus Lösungen, insbesondere aus wässrigen Lösungen. Vorteile der Extraktion mit ionischen Flüssigkeiten gegenüber anderen Verfahren liegen z.B. in der Verwendung von einfachen und günstigen Apparaturen, einem hohen Durchsatz und einer relativ gefahrlosen Handhabung. Es wird daher angestrebt, die gängigen Flüssig-Flüssig-Extraktionsprozesse, in denen mit Wasser unmischbare organische Lösemittel, welche häufig giftig, krebserregend, brennbar und leicht flüchtig sind, verwendet werden, durch Extraktion mit ionischen Flüssigkeiten zu ersetzen. Verfahren zur Extraktion von Metallen mittels ionischer Flüssigkeiten sind beispielsweise in "Solvent extraction of strontium nitrate by a crown ether using room-temperature ionic liquids", S. Dai, Y. Ju und C. Barnes, J. Chem. Soc., Dalton Trans., 1999, 1201-1202 beschrieben. Neben ionischen Flüssigkeiten werden als zusätzliche Extraktionsmittel Kronenether verwendet.

Auch in "Removal of Metal Ions from Aqueous Solutions by Extraction with Ionic Liquids", A. P. de los Rios et al., J. Chem. Eng. Data 2010, 55, 605-608 wird die Verwendung ionischer Flüssigkeiten zur Extraktion von Metallionen aus wässrigen Flüssigkeiten beschrieben.

Die im Stand der Technik bekannten Extraktionsverfahren weisen jedoch verschiedene Nachteile auf. Ein Nachteil des Standes der Technik liegt in der Verwendung eines zusätzlichen Extraktionsmittels welches neben ionischen Flüssigkeiten zum Einsatz kommt. Dieses kann in gewissen Mengen in der wässrigen Phase zurückbleiben. Zudem sind viele Extraktionsmittel und/oder deren Metallkomplexe toxisch oder krebserregend und daher gesundheitsschädlich. Die Extraktion des Metalls oder Metallions wird in diesen Fällen im Wesentlichen durch das Extraktionsmittel erreicht und die ionische Flüssigkeit liefert lediglich einen zusätzlichen positiven Effekt für die Extraktion. K. Binnemans postulierte 2007 in "Lanthanides and Actinides in Ionic Liquids", Chem. Rev., 2007, 107, 2592 - 2614, dass es generell nicht möglich sei, Metallionen aus wässrigen Phasen zu extrahieren, ohne zusätzliche Extraktionsmittel neben den ionischen Flüssigkeiten, wie z.B. ß-Diketonen oder CMPO (Octyl(Phenyl)-N,N-diisobutylcarbamoylmethylphosphinoxid), einzusetzen.

Dieses Problem kann in Einzelfällen durch die Synthese von "Task-Specific-Ionic Liquids" (TSILs) umgangen werden. Hierzu werden maßgeschneiderte ionische Flüssigkeiten für die jeweilige Anwendung synthetisiert. Diese TSILs bestehen in der Regel aus einer ionischen Flüssigkeit, die komplexierende Gruppen in der Molekülstruktur umfassen. A. Ouadi, B. Gadenne, P. Hesemann et al. beschreiben in "Task-Specific Ionic Liquids Bearing 2-Hydroxybenzylamine Units: Synthesis and Americium-Extraction Studies", Chem. Eur. J. 2006, 12, 3074 - 3081 die Synthese von TSILs und die Extraktion von Americiumionen aus wässrigen Phasen. Zwar müssen in diesen speziellen Fällen keine externen Extraktionsmittel mehr zugesetzt werden, es sind jedoch teure und aufwändige Synthesen notwendig, um Extraktionsmittelfunktionalitäten kovalent an die ionischen Flüssigkeiten bildenden Moleküle zu binden.

Ein weiteres Problem liegt in der pH-Sensitivität bekannter Verfahren. Zwar zeigen einzelne bekannte Verfahren eine gute Extraktion im basischen, jedoch nicht im sauren Milieu. So fallen die Verteilungskoeffizienten D bei V. Egorov, D. Djigailo, D. Momotenko et al.: "Task-specific ionic liquid trioctylammonium salicylate as extraction solvent for transition metal ions", Talanta, 2010, 80, 1177 - 1182, im sauren Milieu unter 1.

Ein weiteres Problem liegt in der unselektiven Extraktion bekannter Verfahren. Zwar zeigen einzelne bekannte Verfahren gute Selektivitäten zu einzelnen Metallionen, was jedoch auf die unterschiedlichen Komplexstabilitätskonstanten oder Reaktivitäten der zugesetzten zusätzlichen Extraktionsmittel mit den Metallionen zurückzuführen ist. So eignen sich z.B. Kronenether in Abhängigkeit ihrer Ringgröße für die selektive Extraktion einzelner Ionen.

Eine Aufgabe der vorliegenden Erfindung liegt daher in der Bereitstellung eines Verfahrens zur Extraktion von Metallen, insbesondere Schwermetallen aus wässrigen Phasen, das die oben genannten Nachteile vermindert bzw.

überwindet. Insbesondere liegt eine Aufgabe in der Bereitstellung eines Verfahrens, das ohne den Zusatz von weiteren Extraktionsmitteln auskommt und vorzugsweise über weite pH-Bereiche eingesetzt werden kann. Zudem sollte das Verfahren hohe Extraktionsverhältnisse und hohe Verteilungskoeffizienten liefern und die selektive Extraktion einzelner Metalle ermöglichen.

Die oben benannte Aufgabe wird durch das erfindungsgemäße Verfahren zur Extraktion von Metallen aus wässrigen Phasen mittels Extraktion durch eine ionische Flüssigkeit gelöst. In dem erfindungsgemäßen Verfahren werden ionische Flüssigkeiten der allgemeinen Formel (I)

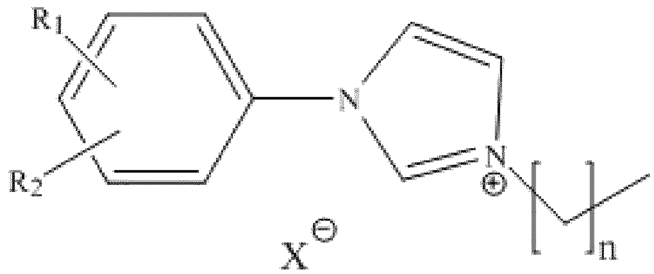

(I)

eingesetzt, wobei

i) $X^-$ ein Anion,
ii) n eine Zahl von 0 bis 14,
iii) $R^1$ und $R^2$ unabhängig voneinander -H, -Halogen, $-NO_2$, $-NH_2$,$-NHR_x$, $-N(R_x)_2$, $-R_x$, -C(O)OH, $-C(O)OR_x$, $-C(O)R_x$ und $-OR_x$ sind,

wobei $R_x$ ein geradkettiger oder verzweigter, gegebenenfalls substituierter C1 bis C18 Alkylrest ist, und es werden keine zusätzlichen Extraktionsmittel verwendet und der pH-Wert der wässrigen Phase liegt zwischen 8 und 0.

Das zu extrahierende Metall ist dabei aus der Gruppe der Schwermetalle, der Gruppe der Seltenen Erden und/oder der Gruppe der Actinoiden ausgewählt.

Gemäß dem erfindungsgemäßen Verfahren wird eine ionische Flüssigkeit gemäß Formel (I) bereitgestellt und zu der zu reinigenden wässrigen Phase gegeben, welche zu extrahierende Metalle enthält. Beide Flüssigkeiten werden z.B. durch Schütteln gemischt, wodurch das Metall aus der wässrigen Phase mittels der ionischen Flüssigkeit extrahiert wird. Ein Vorteil des erfindungsgemäßen Verfahrens ist, dass durch die Verwendung der spezifischen ionischen Flüssigkeiten der Formel (I) gemäß der vorliegenden Erfindung keine zusätzlichen Extraktionsmittel verwendet werden müssen. Zudem ist das erfindungsgemäße Verfahren pH-stabilisiert. Dies bedeutet, dass das Verfahren weniger pH-sensitiv gegenüber herkömmlichen Verfahren ist. Das Extraktionsverhältnis schwankt über den gesamten anzuwendenden pH-Bereich nur wenig und reflektiert eine nahezu stabile Extraktionsleistung.

"Ionische Flüssigkeiten" im Sinne der vorliegenden Erfindung sind Flüssigkeiten bzw. flüssige Salze, die ausschließlich aus Ionen bestehen und in keinem Lösungsmittel gelöst werden müssen, um flüssig zu sein. Diese flüssigen Salze bestehen in der Regel aus einem Kation und einem Anion und enthalten keine neutralen Moleküle. In der Regel weisen ionische Flüssigkeiten Schmelzpunkte unter 100 °C auf. Liegt der Schmelzpunkt der ionischen Flüssigkeiten unter 30 °C, so sind diese bei Raumtemperatur flüssig und werden auch als "Room Temperature Ionic Liquids" (RTIL) bezeichnet und bestehen oft aus organischen Salzen, die stickstoffhaltige Heterozyklen, wie Imidazolium- oder Pyridiniumderivate, umfassen.

"Extraktionsmittel" im Sinne der vorliegenden Erfindung sind alle organischen oder anorganischen Lösungsmittel oder Verbindungen, die Metallionen aus wässrigen Phasen extrahieren können. Die Extraktion kann durch Lösen besagter Metallionen in dem Lösungsmittel oder durch ionische oder kovalente Bindung erfolgen. Desweiteren kann eine Extraktion mit einem Extraktionsmittel durch Komplexierung oder Chelatisierung unter Bildung eines Metall-Extraktionsmittel-Komplexes möglich sein. Gemäß der vorliegenden Erfindung werden für die Extraktion außer erfindungsgemäßen ionischen Flüssigkeiten gemäß Formel (I) keine zusätzlichen Extraktionsmittel zugegeben.

"Alkylreste" im Sinne der vorliegenden Erfindung sind gesättigte Kohlenwasserstoffketten, welche entweder geradkettig oder verzweigt sein können und eine gegebene Anzahl an Kohlenstoffatomen enthalten. Verzweigt bedeutet, dass ein oder beide Wasserstoffatome an einer $CH_2$-Gruppe der linearen Alkylkette durch eine oder zwei Alkylgruppen ersetzt werden. Im Sinne der vorliegenden Erfindung wird die Anzahl der Kohlenstoffatome durch die Bezeichnung "C1-C18" beschrieben, was bedeutet, dass die Alkylkette aus einem bis 18 Kohlenstoffatomen besteht. Die Kohlenstoffanzahl bezieht sich hierbei sowohl auf die Kohlenstoffatome im Grundgerüst als auch auf die Verzweigungen, jedoch nicht auf die Kohlenstoffatome der Substituenten.

"Substituiert" im Sinne der vorliegenden Erfindung bedeutet, dass ein oder mehrere Wasserstoffatome des

Alkylrestes durch ein oder mehrere Substituenten, ausgewählt aus der Gruppe die -Halogen, $-NO_2$, $-NH_2$, $-NHR_x$, $-N(R_x)_2$, $-R_x$, -C(O)OH,-C(O)OR$_x$, -C(O)R$_x$ und -OR$_x$ umfasst, ersetzt sind.

Der Begriff "Metall" im Sinne der vorliegenden Erfindung bezeichnet sowohl elementares Metall als auch gelöste Metallionen, die sowohl einfach als auch mehrfach positiv geladen sein können. Gemäß der Erfindung ist das Metall ausgewählt aus der Gruppe der Schwermetalle, der Gruppe der Seltenen Erden und/oder der Gruppe der Actinoiden.

In einer bevorzugten Ausführungsform ist das Metall Platin, Iridium, Gold, Palladium und am meisten bevorzugt Platin. In einer weiteren Ausführungsform ist das Metall radioaktiv. Geeignete radioaktive Metalle für das erfindungsgemäße Verfahren sind alle dreiwertigen Actinoide und am meisten bevorzugt Thorium und Americium.

In einer weiteren Ausführungsform umfasst das Metall die Gruppe der dreiwertigen Seltenen Erden und in bevorzugter Weise die Gruppe der dreiwertigen Lanthanoide und am meisten bevorzugt Europium und Gadolinium.

Der pH-Bereich des erfindungsgemäßen Verfahrens umfasst den sauren, neutralen und leicht basischen Bereich und liegt zwischen 8 und 0 oder in einer bevorzugten Ausführungsform den sauren Bereich und liegt zwischen 2 und 0.

In einer weiteren bevorzugten Ausführungsform des erfindungsgemäßen Verfahrens werden hohe Extraktionsverhältnisse E% erzielt. Das Extraktionsverhältnis ist ein Maß für die Effizienz des Verfahrens und gibt an wie viele Metallionen (in g) die ionische Flüssigkeit im Verhältnis zur Gesamtmasse an Metallionen zum Zeitpunkt t aufgenommen hat. Je größer dieser Wert wird, desto besser extrahiert die ionische Flüssigkeit die Metallionen. In einer bevorzugten Ausführungsform ist E% größer 10, 25, 50, 70, 90 oder 95, bevorzugter Weise größer 70, 90 oder 95 und am meisten bevorzugt größer 95. Das vorgenannte Extraktionsverhältnis E% von wenigstens 10, 25, 50, 70, 90 oder 95 wird vorzugsweise innerhalb von 2 Stunden, mehr bevorzugt innerhalb von 1 Stunde und am meisten bevorzugt innerhalb von weniger als 30, 25, 20 oder 15 Minuten erreicht.

In einer bevorzugten Ausführungsform des erfindungsgemäßen Verfahrens nimmt das Extraktionsverhältnis über den gesamten pH-Bereich um nicht mehr als 60 %, 50 %, 40 %, 35 % oder 30 %, vorzugsweise um nicht mehr als 40 %, 35 % oder 30 % und am meisten bevorzugt um nicht mehr als 30 % ab.

In einer weiteren Ausführungsform des erfindungsgemäßen Verfahrens nimmt das Extraktionsverhältnis um nicht mehr als 60 % im pH-Bereich zwischen 8 und 0, um nicht mehr als 50 % im pH-Bereich zwischen 5 und 0 und um nicht mehr als 30 % im pH-Bereich zwischen 3 und 0 ab.

In einer weiteren bevorzugten Ausführungsform des erfindungsgemäßen Verfahrens werden hohe Verteilungsverhältnisse D erzielt. Das Verteilungsverhältnis ist ein Maß für die Effizienz des Verfahrens und gibt an wie viele Metallionen (in g) in der ionischen Flüssigkeit im Verhältnis zur Masse an Metallionen in der wässrigen Phase zum Zeitpunkt t vorliegen. Je größer dieser Wert wird, desto besser extrahiert die ionische Flüssigkeit die Metallionen. In einer bevorzugten Ausführungsform ist D größer 0,1, 0,3, 0,8, 1, 3, 10, 100 oder 1000, noch bevorzugter Weise größer 100 oder 1000 und am meisten bevorzugt größer 1000. Das vorgenannte Verteilungsverhältnis D von größer 0,1, 0,3, 0,8, 1, 3, 10, 100 oder 1000 wird vorzugsweise innerhalb von 2 Stunden, mehr bevorzugt innerhalb von 1 Stunde und am meisten bevorzugt innerhalb von weniger als 30, 25, 20 oder 15 Minuten erreicht.

In einer weiteren bevorzugten Ausführungsform kann das erfindungsgemäße Verfahren bei Temperaturen von 5 °C bis 95 °C erfolgen, vorzugsweise von 15 °C bis 60 °C, noch bevorzugterer Weise von 20 °C bis 40 °C und am meisten bevorzugt bei ca. 25 °C. Bei den bevorzugten Temperaturen ist eine leichte Handhabung des Verfahrens gegeben, da die Flüssigkeiten weder gekühlt noch geheizt werden müssen, und somit bei Raumtemperatur gearbeitet werden kann.

Es wurde überraschenderweise gefunden, dass ionische Flüssigkeiten der allgemeinen Formel (I) besonders geeignet für das erfindungsgemäße Verfahren sind, wenn $X^-$ Bis(trifluormethylsulfonyl)imid oder Dicyanamid ist und/oder n = 5 bis 13, vorzugsweise 10 ist und/oder $R^1$ -H und $R^2$ ausgewählt ist aus der Gruppe, die -H, -Halogen, $-NO_2$, $-NH_2$, $-NHR_x$, $-N(R_x)_2$, $-R_x$, -C(O)OH, -C(O)OR$_x$, -C(O)R$_x$ und -OR$_x$ umfasst, wobei $R_x$ ein geradkettiger oder verzweigter, gegebenenfalls substituierter C1 bis C18 Alkylrest ist und vorzugsweise die para-Position einnimmt.

Die Symmetrie der Substitutionsmuster am Aromaten hat einen gezielten Einfluss auf die Eigenschaften der ionischen Flüssigkeiten. Im Sinne der vorliegenden Erfindung bezieht sich der Begriff "para-Position" auf die C4-Position am Benzolring und weist daraufhin, dass es sich um eine 1,4-Substitution handelt.

Von besonderem Vorteil ist wenn $R^1$ und/oder $R^2$ Reste mit einem +M-Effekt sind. Weiterhin hat sich gezeigt, dass es vorteilhaft für das erfindungsgemäße Verfahren ist, wenn $R^2$ -Halogen, vorzugsweise Br, oder -OR$_x$ ist, wobei $R_x$ ein geradkettiger oder verzweigter, gegebenenfalls substituierter C1 bis C18 Alkylrest und vorzugsweise Methyl oder Ethyl ist.

Der mesomere Effekt (oder Konjugationseffekt) spiegelt die Elektronen im $\pi$-Bindungssystem eines Moleküls wider und entsteht durch Atome oder Gruppen, die $\pi$-Bindungsatome ins System drücken oder herausziehen. Der positive mesomere Effekt (+M-Effekt) erhöht die Elektronendichte im aromatischen Ringsystem indem ein weiteres eigenes freies Elektronenpaar zur Verfügung gestellt wird (z.B. - Halogen, $-NH_2$, $-NHR^3$, $-NR^3_2$, $-OR^3$). Der negative mesomere Effekt (-M-Effekt) erniedrigt die Elektronendichte im aromatischen Ringsystem indem eine Elektronenlücke Elektronen aus dem System zieht (z.B. $-NO_2$, -C(O)OH, -C(O)OR$^3$, -C(O)R$^3$). $R^3$ bezeichnet einen geradkettigen oder

verzweigten Alkylrest. Im Sinne der vorliegenden Erfindung ist -H als "neutraler Rest" definiert.

Ein weiterer Vorteil ist, dass mit dem erfindungsgemäßen Verfahren Metalle ausgewählt aus der Gruppe der Schwermetalle und vorzugsweise Platin extrahiert werden können, da viele Schwermetalle für den menschlichen Organismus gesundheitsschädlich oder giftig sind, da sie im Körper nicht abgebaut werden können. Sie gelangen über Abwässer in die Umwelt und akkumulieren sich in der Nahrungskette, wodurch sie schließlich vom Menschen aufgenommen werden.

Im Sinne der vorliegenden Erfindung sind "Schwermetalle" alle Metalle die eine Dichte von 5 g/$cm^3$ und größer aufweisen.

Ein weiterer Vorteil ist, dass mit dem erfindungsgemäßen Verfahren Metalle ausgewählt aus der Gruppe der Seltenen Erden und/oder Actinoide und vorzugsweise Europium extrahiert werden können. Alle Actinoide und deren Isotope sind radioaktiv und toxisch und werden durch Prozesse in den Kernkraftwerken durch Neutroneneinfang gebildet. Kontaminationen von Actinoiden in wässrigen Lösungen (Kühlwasser) und an festen Oberflächen (Bindung im Leitungssystem) bzw. durch störfallbedingte Freisetzung können nun mit den spezifischen ionischen Flüssigkeiten der Formel (I) gemäß der vorliegenden Erfindung gereinigt werden. Trotz der immer wichtigeren industriellen Bedeutung lassen sich die Metalle der Seltenen Erden nur schwer gewinnen, weshalb das Recycling dieser Metalle aus Abwässern oder Kühlwässern Seltene Erden verarbeitender Betriebe eine wichtige Technologie darstellt, die mit dem erfindungsgemäßen Verfahren durchführbar ist.

Ein weiterer Vorteil ist, dass das erfindungsgemäße Verfahren pH-stabilisiert ist. Somit muss der pH-Wert nicht erst durch Zugabe von Säuren oder Laugen auf einen bestimmten Wert eingestellt werden um ideale Extraktionsergebnisse zu erzielen. Die Metalle in der wässrigen Phase können sofort und ohne zusätzliche Schritte extrahiert werden. Im erfindungsgemäßen Verfahren liegt der pH-Bereich zwischen 8 und 0, zwischen 5 und 0, zwischen 3 und 0 und vorzugsweise zwischen 2 und 0.

Ein weiterer Vorteil des erfindungsgemäßen Verfahrens ist, dass das Extraktionsverhältnis E% über den gesamten anzuwendenden pH-Bereich nur wenig schwankt und eine nahezu stabile Extraktionsleistung reflektiert. Das Extraktionsverhältnis nimmt über einen pH-Bereich von 8 bis 0 um nicht mehr als 60 %, 50 %, 40 %, 35 % oder 30 %, vorzugsweise um nicht mehr als 30 % ab.

Das "Extraktionsverhältnis E%" im Sinne der vorliegenden Erfindung ist definiert als

$$E\% = \frac{m(IL)}{m_0} \quad (1)$$

wobei m(IL) die Masse der Metallionen zum Zeitpunkt t in der ionischen Flüssigkeit und $m_0$ die Gesamtmasse der Metallionen im System sind. $m_0$ entspricht der Menge an zugesetzten Metallionen. In einer bevorzugten Ausführungsform ist E% größer 10, 25, 50, 70, 90 oder 95, bevorzugter Weise größer 70, 90 oder 95 und am meisten bevorzugt größer 95. Das vorgenannte Extraktionsverhältnis E% von wenigstens 10, 25, 50, 70, 90 oder 95 wird vorzugsweise innerhalb von 2 Stunden, mehr bevorzugt innerhalb von 1 Stunde und am meisten bevorzugt innerhalb von weniger als 30, 25 , 20 oder 15 Minuten erreicht.

Das "Verteilungsverhältnis D" im Sinne der vorliegenden Erfindung ist definiert als

$$D = \frac{m(IL)}{m(aq)} \quad (2)$$

wobei m(IL) die Masse der Metallionen zum Zeitpunkt t in der ionischen Flüssigkeit und m(aq) die Masse der Metallionen zum Zeitpunkt t in der wässrigen Phase darstellen. m(aq) wird durch ICP-MS ermittelt. m(IL) wird berechnet aus der Differenz zwischen $m_0$ und m(aq). Der Zeitpunkt t ist definiert als der Zeitpunkt, an dem m(aq) bzw. m(IL) bestimmt werden und berechnet sich ausgehend vom Start der Extraktion (Zeitpunkt zu dem die ionische Flüssigkeit der wässrigen Lösung zugesetzt wird). In einer bevorzugten Ausführungsform ist D größer 0,1, 0,3, 0,8, 1, 3, 10, 100 oder 1000, noch bevorzugter Weise größer 100 oder 1000 und am meisten bevorzugt größer 1000. Das vorgenannte Verteilungsverhältnis D von größer 0,1, 0,3, 0,8, 1, 3, 10, 100 oder 1000 wird vorzugsweise innerhalb von 2 Stunden, mehr bevorzugt innerhalb von 1 Stunde und am meisten bevorzugt innerhalb von weniger als 30, 25, 20 oder 15 Minuten erreicht.

Ein Vorteil des erfindungsgemäßen Verfahrens ist, dass durch die Verwendung einer ionischen Flüssigkeit der allgemeinen Formel (I),

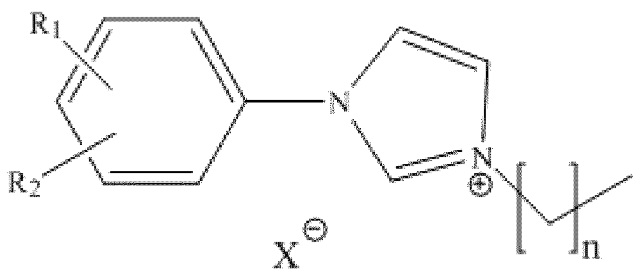

(I)

wobei

i) $X^-$ ein Anion,
ii) n eine Zahl von 0 bis 14,
iii) $R^1$ und $R^2$ unabhängig voneinander -H, -Halogen, $-NO_2$, $-NH_2$,$-NHR_x$, $-N(R_x)_2$, $-R_x$, -C(O)OH, $-C(O)OR_x$, $-C(O)R_x$ und $-OR_x$ sind,

wobei $R_x$ ein geradkettiger oder verzweigter, gegebenenfalls substituierter C1 bis C18 Alkylrest ist, und keines zusätzlichen Extraktionsmittel wenigstens ein Metall aus einer wässrigen Phase extrahiert werden kann, wobei der pH-Wert der wässrigen Phase zwischen 8 und 0 liegt.

Das zu extrahierende Metall ist dabei aus der Gruppe der Schwermetalle, der Gruppe der Seltenen Erden und/oder der Gruppe der Actinoiden ausgewählt.

15 Ein weiterer Vorteil des erfindungsgemäßen Verfahrens ist, dass durch die Verwendung der spezifischen ionischen Flüssigkeit der Formel (I) gemäß der vorliegenden Erfindung, ein Metall selektiv aus einer Lösung mit einem Gemisch aus wenigstens zwei Metallen extrahiert werden kann. Dadurch können ein oder mehrere Metalle aus einem Gemisch aus Metallen durch Extraktion abgetrennt werden. So ist z.B. die Trennung von Platin und Nickel voneinander möglich. Dieses Verfahren kann verwendet werden, wenn z.B. einzelne Metalle aus einer Lösung mit einem Gemisch recycelt werden sollen oder toxische Metalle aus einem Gemisch entfernt werden sollen. Beispielsweise können mittels der erfindungsgemäßen Verbindungen Gold, Platin und/oder Palladium sequentiell aus Industriewässern extrahiert werden. Dabei kommen erfindungsgemäß ggf. eine oder mehrere erfindungsgemäße Verbindungen zum Einsatz. Hierbei ist es bevorzugt, dass die ionische Flüssigkeit primär nur das gewünschte Metall extrahiert, um eine möglichst hohe Effizienz zu erreichen. Besonders bevorzugt wird das gewünschte Metall in Bezug auf das nicht zu extrahierende Metall mindestens im Verhältnis 10:1, 50:1 und vorzugsweise 99:1 extrahiert. Die erfindungsgemäß vorgesehene selektive Extraktion kann auch für Pt/Fe-Mischungen, Ir/Fe-Mischungen und Ir/Ni-Mischungen angewendet werden.

Gemäß dem erfindungsgemäßen Verfahren wird eine ionische Flüssigkeit gemäß Formel (I) verwendet. Die ionische Flüssigkeit gemäß Formel (I) besteht aus Kationen und Anionen, die unabhängig voneinander gewählt werden können.

Es hat sich herausgestellt, dass ionischen Flüssigkeiten der Formel (I) für das erfindungsgemäße Verfahren besonders geeignet sind, wenn n eine Zahl zwischen 0 und 14 ist und das Stickstoffatom im Imidazoliumring eine unverzweigte Alkylkette trägt, die aus einem bis 15 Kohlenstoffatomen besteht. Mögliche Reste sind eine Methyl-, Ethyl-, n-Propyl-, n-Butyl-, n-Pentyl-, n-Hexyl-, n-Heptyl-, n-Octyl-, n-Nonyl-, n-Decyl-, n-Undecyl-, n-Dodecyl-, n-Tridecyl-, n-Tetradecyl-, oder eine n-Pentadecylgruppe. Gemäß einer bevorzugten Ausführungsform ist n gleich 5, 6, 7, 8, 9, 10, 11, 12 oder 13 und am meisten bevorzugt 10.

In den für das erfindungsgemäße Verfahren beanspruchten ionischen Flüssigkeiten sind $R^1$ und $R^2$ unabhängig voneinander -H, -Halogen, $-NO_2$, $-NH_2$, $-NHR_x$, $-N(R_x)_2$, $-R_x$, -C(O)OH, $-C(O)OR_x$, $-C(O)R_x$ und $-OR_x$, wobei $R_x$ ein geradkettiger oder verzweigter, gegebenenfalls substituierter C1 bis C18 Alkylrest ist. Halogen kann hierbei -F, -Cl, -Br oder -I sein. $R_x$ kann ein geradkettiger oder verzweigter C1 bis C18 Alkylrest sein. Mögliche Reste sind eine Methyl-, Ethyl-, n-Propyl-, iso-Propyl-, n-Butyl-, sec-Butyl-, iso-Butyl- oder tert-Butylgruppe sowie eine Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl- oder eine Octadecylgruppe und die entsprechenden Isomeren der jeweiligen Gruppe. In einer weiteren Ausführungsform können ein oder mehrere Wasserstoffatome des Alkylrestes durch einen oder mehrere Substituenten, ausgewählt aus der Gruppe, die -Halogen, $-NO_2$, $-NH_2$,$-NHR_x$, $-N(R_x)_2$, $-R_x$, -C(O)OH, $-C(O)OR_x$, $-C(O)R_x$ und $-OR_x$ umfasst, ersetzt sein.

$R^1$ und $R^2$ können neutrale Reste oder Reste mit einem +M-Effekt oder -M-Effekt sein. In einer bevorzugten Ausführungsform ist $R^1$ ein Rest mit +M-Effekt und $R^2$ ein Rest mit -M-Effekt oder neutraler Rest oder $R^1$ ein Rest mit -M-Effekt oder neutraler Rest und $R^2$ ein Rest mit einem +M-Effekt. In einer weiteren bevorzugten Ausführungsform sind $R^1$ und $R^2$ neutrale Reste oder Reste mit einem +M-Effekt. Reste mit einem +M-Effekt im Sinne der vorliegenden Erfindung sind Halogen oder $OR_x$, bevorzugter Weise OBu, OPr, OEt und OMe und am meisten bevorzugt OEt und OMe.

Die für das erfindungsgemäße Verfahren beanspruchten ionischen Flüssigkeiten besitzen keinen, einen oder

zwei Reste ungleich -H. In einer besonders bevorzugten Ausführungsform ist ein Substituent ungleich -H. In einer weiteren bevorzugten Ausführungsform ist dieser Substituent -Halogen ausgewählt aus der Gruppe die -F,-Cl, -Br und -I umfasst und am meisten bevorzugt -Br oder -$OR_x$, wobei $R_x$ ein geradkettiger oder verzweigter, gegebenenfalls substituierter C1 bis C18 Alkylrest ist, bevorzugter Weise Methyl, Ethyl, Propyl, Butyl und am meisten bevorzugt Methyl oder Ethyl. Dieser sitzt entweder in ortho-, meta- oder para-Position und besonders bevorzugt in para-Position.

Bevorzugte Ausführungsformen der für das erfindungsgemäße Verfahren beanspruchten ionischen Flüssigkeiten bzw. deren Kationen sind 1-(4-Methoxyphenyl)-3-methyl-imidazolium, 1-(2-Bromphenyl)-3-methyl-imidazolium, 1-(4-Ethylphenyl)-3-methyl-imidazolium, 1-(2-Ethylphenyl)-3-methyl-imidazolium, 1-Phenyl-3-methyl-imidazolium, 1-(4-Ethoxyphenyl)-3-propyl-imidazolium, 1-(4-Methoxyphenyl)-3-butyl-imidazolium, 1-(4-Ethoxyphenyl)-3-butyl-imidazolium, 1-(2-Ethoxyphenyl)-3-butyl-imidazolium, 1-(4-Chlorphenyl)-3-butyl-imidazolium, 1-(4-Bromphenyl)-3-butyl-imidazolium, 1-(4-Ethylphenyl)-3-butyl-imidazolium, 1-(2-Ethylphenyl)-3-butyl-imidazolium, 1-(4-Ethoxyphenyl)-3-pentyl-imidazolium, 1-Phenyl-3-methyl-imidazolium, 1-(4-Methoxyphenyl)-3-hexyl-imidazolium, 1-(2-Methoxyphenyl)-3-hexyl-imidazolium, 1-(4-Ethoxyphenyl)-3-hexyl-imidazolium, 1-(2-Ethoxyphenyl)-3-hexyl-imidazolium, 1-(4-Chlorphenyl)-3-hexyl-imidazolium, 1-(4-Bromphenyl)-3-hexyl-imidazolium, 1-(4-Ethylphenyl)-3-hexyl-imidazolium, 1-(2-Ethylphenyl)-3-hexyl-imidazolium, 1-Phenyl-3-undecyl-imidazolium, 1-(4-Methoxyphenyl)-3-undecyl-imidazolium, 1-(2-Methoxyphenyl)-3-undecyl-imidazo lium, 1-(4-Ethoxyphenyl)-3-undecyl-imidazolium, 1-(4-Chlorphenyl)-3-undecyl-imidazolium, 1-(4-Bromphenyl)-3-undecyl-imidazolium, 1-(2-Bromphenyl)-3-undecyl-imidazolium, 1-(4-Ethylphenyl)-3-undecyl-imidazolium, 1-(2-Ethylphenyl)-3-undecyl-imidazolium, 1-Phenyl-3-tetradecyl-imidazolium1-(4-Methoxyphenyl)-3-tetradecyl-imidazolium, 1-(4-Ethoxyphenyl)-3-tetradecyl-imidazolium und 1-(2-Bromphenyl)-3-tetradecyl-imidazolium, 1-(4-Ethylphenyl)-3-tetradecyl-imidazolium, 1-(2-Ethylphenyl)-3-tetradecyl-imidazolium, und am meisten bevorzugt sind 1-Phenyl-3-undecyl-imidazolium, 1-(4-Bromphenyl)-3-undecyl-imidazolium und 1-(4-Methoxyphenyl)-3-undecyl-imidazolium.

Besonders geeignete ionische Flüssigkeiten für das erfindungsgemäße Verfahren sind ionische Flüssigkeiten, die als Anion ein Ion enthalten, ausgewählt aus der Gruppe, welche Hexafluorophosphat, Tris(pentafluoroethyl)trifluorphosphat, Tris-(heptafluoropropyl)trifluorophosphat, Phosphate der allgemeinen Formel (II, III oder IV), Tetracyanoborat, Sulfonate der allgemeinen Formel (IV), Sulfate der allgemeinen Formel (VI), Carboxylate der allgemeinen Formel (VII), Tricyanomethan, Dicyanamid, Imide der allgemeinen Formel (VIII), Bis(fluorsulfonyl)imid, Sulfonimide der allgemeinen Formel (IX), tetrasubstituiertes Borat der allgemeinen Formel (X), Tetrafluoroborat und Bis[oxalato(2-)-O,O']borat, umfasst, wobei die Reste $R_3$ bis $R_{20}$ einen Kohlenstoff enthaltenden organischen, gesättigten oder ungesättigten, acyclischen oder cyclischen, aliphatischen oder aromatischen Rest mit 1 bis 20 Kohlenstoffatomen, welcher ein oder mehrere Heteroatome enthalten und/oder durch eine oder mehrere funktionelle Gruppen oder Fluor substituiert sein kann, umfassen.

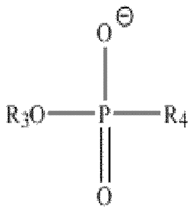
(II)

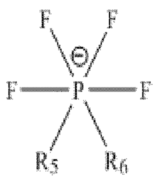
(III)

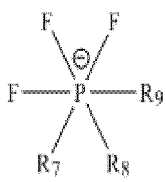
(IV)

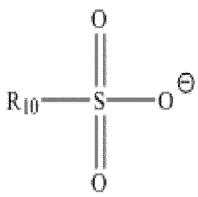
(V)

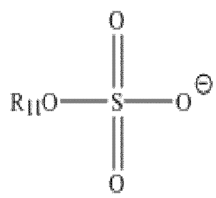
(VI)

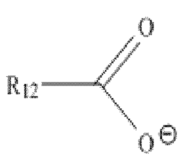
(VIII)

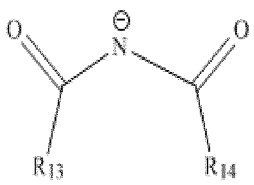
(VII)

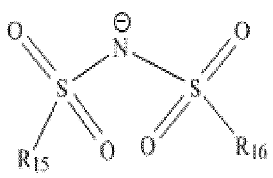
(IX)

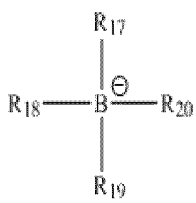
(X)

In einer bevorzugten Ausführungsform für das erfindungsgemäße Verfahren enthält die ionische Flüssigkeit ein Anion, ausgewählt aus einer Gruppe, welche Formel (IX) und Dicyanamid umfasst. In einer besonders bevorzugten Ausführungsform ist das Anion Bis(trifluormethylsulfonyl)imid oder Dicyanamid.

Besonders bevorzugte Ausführungsformen der für das erfindungsgemäße Verfahren beanspruchten ionischen Flüssigkeiten sind 1-(4-Bromphenyl)-3-undecyl-imidazoliumbis(trifluormethylsulfon)imid, 1-Phenyl-3-undecyl-imidazolium und 1-(4-Methoxyphenyl)-3-undecyl-imidazoliumbis(trifluormethylsulfon)imid.

In einer für das erfindungsgemäße Verfahren bevorzugten Ausführungsform haben die ionischen Flüssigkeiten

Schmelzpunkte vorzugsweise unter 90 °C, bevorzugter Weise unter 50 °C, noch bevorzugterer Weise unter 30 °C und am meisten bevorzugt unter 10 °C. Generell ist aber jede ionische Flüssigkeit nach oben genannten Kriterien, die bei der jeweiligen Verfahrenstemperatur und dem jeweiligen Verfahrensdruck stabil ist, für die Verwendung im erfindungsgemäßen Verfahren geeignet.

In einer weiteren bevorzugten Ausführungsform haben die für das erfindungsgemäße Verfahren geeigneten ionischen Flüssigkeiten Zersetzungstemperaturen über 100 °C, bevorzugter Weise über 200 °C, noch bevorzugterer Weise über 300 °C und am meisten bevorzugt über 320 °C.

Durch Wahl geeigneter Kationen und Anionen, können die Eigenschaften der ionischen Flüssigkeiten gezielt eingestellt werden. Im erfindungsgemäßen Verfahren werden die Kationen und Anionen der ionischen Flüssigkeit so gewählt, dass sie den geforderten Ansprüchen bezüglich Schmelzpunkt, Zersetzungstemperatur, Viskosität und Hydrophobie entsprechen. Die Auswahl geeigneter Kationen und Anionen kann durch einen Fachmann ausgeführt werden.

Bestandteil der Erfindung ist auch eine ionische Flüssigkeit der allgemeinen Formel (I), wobei $X^-$ ein Anion, n eine Zahl von 0 bis 14 und $R^1$ und $R^2$ unabhängig voneinander -H, -Halogen, $-NO_2$, $-NH_2$, $-NHR_x$, $-N(R_x)_2$, $-R_x$, -C(O)OH, $-C(O)OR_x$,$-C(O)R_x$ und $-OR_x$ sind, wobei $R_x$ ein geradkettiger oder verzweigter, gegebenenfalls substituierter C1 bis C18 Alkylrest ist, zur Verwendung in dem erfindungsgemäßen Verfahren, wobei keine zusätzlichen Extraktionsmittel verwendet werden und der pH-Wert der wässrigen Phase zwischen 8 und 0 liegt.

In dem erfindungsgemäßen Verfahren werden keine zusätzlichen Extraktionsmittel verwendet. Beispielsweise nicht verwendet werden Azo/Amin -Funktionalität in Kombination mit einer aromatischen Hydroxyl-Gruppe in ortho-Stellung welche als Metallionen-Chelat-Gruppe wirken können. Beispiele hierfür sind z.B. PAN (1-(Pyridylazo)-2-naphtol), TAN (1-(Thiazolylazo)-2-naphtol) oder 1-Butyl-3-[3-(2-hydroxybenzylamino)propyl]-3H-imidazol-1-ium-bis(trifluormethan)sulfonimid. Auch nicht verwendet werden Kronenethergruppen und Kryptanden z.B. 18-Krone-6-Ether. Weiterhin nicht verwendet werden beispielsweise organische Verbindungen, die Harnstoff- oder Thioharnstoffgruppen tragen und Metalle komplexieren. Diese Liste an Extraktionsmitteln behebt keinen Anspruch auf Vollständigkeit und dient nur zur Verdeutlichung.

Die ionischen Flüssigkeiten gemäß Formel (I) werden zu der zu reinigenden wässrigen Phase gegeben, welche zu extrahierende Metalle enthält. In einer weiteren Ausführungsform des erfindungsgemäßen Verfahrens kann sowohl die ionische Flüssigkeit zur wässrigen Phase, als auch die wässrige Phase zur ionischen Flüssigkeit gegeben werden. Beide Flüssigkeiten können auch in einem dritten Gefäß gleichzeitig zusammengegeben werden. Bei der Zugabe können sowohl beide Phasen flüssig, eine Phase flüssig und die zweite fest oder beide Phasen fest sein. Nach Verflüssigung beider Phasen kann das Verfahren erfindungsgemäß durchgeführt werden.

Die für das erfindungsgemäße Verfahren geeigneten ionischen Flüssigkeiten sind hydrophob und nicht in der wässrigen Phase löslich, wodurch sich ein 2-Phasengemisch bildet. Dabei kann die ionische Flüssigkeit in der unteren Phase und die wässrige Phase darüber oder die ionische Flüssigkeit in der oberen Phase über der wässrigen Phase sein.

Anschließend werden beide Flüssigkeiten gemischt, wodurch das Metall aus der wässrigen Phase mittels der ionischen Flüssigkeit extrahiert wird. In einer bevorzugten Ausführungsform erfolgt die Durchmischung mittels mechanischer Agitation (Schütteln oder Rühren) oder per Ultraschall. Um eine gute Durchmischung beider Phasen zu erreichen darf die Viskosität der ionischen Flüssigkeit nicht zu hoch sein. Bei zu hoher Viskosität ist die Verdünnung der ionischen Flüssigkeit mit einem Lösungsmittel möglich. Dabei darf das Lösungsmittel nicht in der wässrigen Phase löslich sein. Geeignete Lösungsmittel sind z.B. Trichlormethan, Trichlorethan, Methylethylketon, Dichlormethan, Butylacetat oder n-Butanol, jedoch sind auch andere Lösungsmittel für das erfindungsgemäße Verfahren einsetzbar, sofern sie die genannten Anforderungen erfüllen. In einer besonders bevorzugten Ausführungsform wird kein zusätzliches Lösungsmittel verwendet.

Nach Beendigung der Durchmischung trennt sich die Emulsion wieder in zwei Phasen auf, wodurch die beiden Lösungen separiert werden können. Das Metall befindet sich nun in der ionischen Flüssigkeit und nicht mehr in der wässrigen Phase. In einer bevorzugten Ausführungsform kann das Auftrennen der Emulsion entweder ohne äußeren Einfluss oder mit äußerem Einfluss z.B. durch Zentrifugation erfolgen.

Eine Möglichkeit die Metalle aus der ionischen Flüssigkeit zu gewinnen, bietet die elektrochemische Abscheidung. Ein geeignetes Verfahren wird hierzu in EP 1 951 934 beschrieben.

## Beispiele

### Messmethoden

Die $^1H$ und $^{13}C$ NMR Spektren werden mit einem Bruker DRX-300 bei 300.13 und 75.453 MHz gemessen. Das deuterierte Lösungsmittel dient als interne Referenz. Die Elementaranalysen wird von dem mikroanalytischen Labor des Institutes mit einem EuroVektor Euro EA-3000 Gerät bestimmt. Die Schmelzpunkte der Verbindungen werden entweder mittels eines PolyTherm A Schmelzpunktsgerätes der Firma Wagner and Munz oder, im Fall von flüssigen Proben, mit einem Mettler-Toledo DSC-Gerät bestimmt. Zur Messung der thermischen Belastbarkeit (TGA) dient ein

*NETZSCH STA 409*. Die Messungen erfolgt unter Luft mit einer Scanrate von 10 K/min in einem Temperaturbereich von 30 bis 500 °C.

Die Konzentration der Kationen wird mittels ICP-MS an einem ELAN 9000 der Firma Perkin Elmer SCIEX ermittelt. Dazu werden die Proben 1:1000 in 1% $HNO_3$ verdünnt und als Dreifachbestimmung der Metallgehalt mit Hilfe einer Eichkurve (5, 10, 20 und 50 $\mu$g/L Metall in 1% $HNO_3$) ermittelt. Als Standard werden CertPrep Standards (1 g/L), ein SPS-SW2-Standard und Rh als interner Standard mit 5 $\mu$g/L eingesetzt. Die Konzentration wird jeweils zwei Stunden nach Zugabe der ionischen Flüssigkeit zur Lösung ermittelt.

Die pH-Werte der wässrigen Lösungen werden mittels einer HACH sension2 Gelfilled pH Electrode gemessen.

Beispiel 1 - Extraktionsverhältnis einiger ionischer Flüssigkeiten

Zur Messung der Verteilung von Metallionen zwischen wässriger Phase und ionischer Flüssigkeit werden 30 ml einer wässrigen Kalium-tetrachloroplatinat-Lösung (0,1 mmol/l) mit 100 $\mu$l ionischer Flüssigkeit in Kontakt gebracht. Das Gemisch wird 2 Stunden mit Hilfe eines Vibramax 100 von Heidolph bei 1200 rpm in Bewegung gehalten. Es werden nach einem bestimmten Zeitintervall Proben aus der wässrigen Phase entnommen und mit 10 $\mu$l konzentrierter $HNO_3$ versetzt (Dies dient zur Stabilisierung des Pt in der Lösung). Die Konzentration der Kationen wird mittels ICP-MS ermittelt.

Tabelle 1: Platin-Extraktionsverhältnisse E in % von verschiedenen ionischen Flüssigkeiten; $R^1$ ist in ortho-Stellung und $R^2$ in para-Stellung, das Anion ist Bis(trifluormethylsulfonyl)imid

| $R^1$ | $R^2$ | n=0 | n=2 | n=3 | n=4 | n=5 | n=10 | n=13 |
|---|---|---|---|---|---|---|---|---|
| H | H | | | 52,3 | | 27,6 | >96,1 | 29 |
| H | OMe | 26,6 | | 26,4 | | 12,3 | 95,5 | 54,0 |
| OMe | H | | | | | 12,0 | 35,4 | 14,5 |
| H | OEt | | 12,7 | 15,5 | 3,8 | 27,9 | 75,0 | 19,5 |
| OEt | H | | | 31,9 | | 22,9 | 93,5 | 18,2 |
| H | Cl | | | 27,0 | | 40,0 | 50,0 | |
| H | Br | | | 34,2 | | 62,1 | 96,5 | |
| Br | H | 27,5 | | | | | 29,0 | 12,0 |
| H | Et | 45,0 | | 21,3 | | 24,1 | 74,7 | 30 |
| Et | H | 44,0 | | 42,9 | | 23,8 | 61,9 | 33 |
| OMe | $NO_2$ | | | | | | 66,6 | |

Tabelle 2: Platin-Extraktionsverhältnisse E in % von einer ionischen Flüssigkeit; $R^1$ ist in ortho-Stellung und $R^2$ in para-Stellung, das Anion ist Dicyanamid

| $R^1$ | $R^2$ | n=0 | n=2 | n=3 | n=4 | n=5 | n=10 | n=13 |
|---|---|---|---|---|---|---|---|---|
| H | OMe | | | | | | 91,1 | |

Die untersuchten ionischen Flüssigkeiten weisen sehr gute Extraktionsverhältnisse auf. Insbesondere eignen sich die ionischen Flüssigkeiten, bei denen n = 10 ist, für die Platinextraktion besonders gut, da sie über 90 % des Pt aus der wässrigen Phase extrahieren können. Vergleicht man die ionische Flüssigkeit, welche als Anion Dicyanamid hat, mit der entsprechenden ionischen Flüssigkeit, welche als Anion Bis(trifluormethylsulfonyl)imid hat, so erkennt man, dass beide ionische Flüssigkeiten ähnliche gute Extraktionsverhältnisse aufweisen, was den Schluss nahelegt, dass beide Anionen für das bestimmungsgemäße Verfahren gut geeignet sind.

Beispiel 2 - Verteilungsverhältnis D einiger ionischer Flüssigkeiten

Zur Messung der Verteilung von Metallionen zwischen wässriger Phase und ionischer Flüssigkeit werden 30 ml einer wässrigen Kalium-tetrachloroplatinat-Lösung (0,1 mmol/l) mit 100 $\mu$l ionischer Flüssigkeit in Kontakt gebracht. Das Gemisch wird 2 Stunden mit Hilfe eines Vibramax 100 von Heidolph bei 1200 rpm in Bewegung gehalten. Es werden

nach einem bestimmten Zeitintervall Proben aus der wässrigen Phase entnommen und mit 10 µl konzentrierter $HNO_3$ versetzt (Dies dient zur Stabilisierung des Pt in der Lösung). Die Konzentration der Kationen wird mittels ICP-MS ermittelt.

Tabelle 3: Platin-Verteilungsverhältnisse D von verschiedenen ionischen Flüssigkeiten; $R^1$ ist in ortho-Stellung und $R^2$ in para-Stellung, das Anion ist Bis-(trifluormethylsulfonyl)imid

| $R^1$ | $R^2$ | n=0 | n=2 | n=3 | n=4 | n=5 | n=10 | n=13 |
|---|---|---|---|---|---|---|---|---|
| H | H | | | 1,232 | | 0,414 | 184,357 | 0,454 |
| H | OMe | 0,399 | | 0,389 | | 0,151 | 109,7 | 1,345 |
| OMe | H | | | | | 0,148 | 0,598 | 0,183 |
| H | OEt | | 0,157 | 0,198 | 0,043 | 0,420 | 3,614 | 0,257 |
| H | Cl | | | 0,396 | | 0,723 | 1,116 | |
| H | Br | | | 0,568 | | 1,877 | 1570,3 | |
| Br | H | 0,413 | | | | | 0,442 | 0,148 |
| H | Et | 0,916 | | 0,294 | | 0,344 | 3,548 | 0,458 |
| Et | Ht | 0,864 | | 0,828 | | 0,338 | 1,851 | 0,525 |

Viele der untersuchten ionischen Flüssigkeiten weisen sehr gute Verteilungsverhältnisse auf. Insbesondere eignen sich die ionischen Flüssigkeiten, bei denen n = 10 ist und die somit eine Undecyl-Kette tragen, besonders gut für die Platinextraktion.

Beispiel 3 - Extraktionsverhältnisse bei verschiedenen pH-Werten

Zur Untersuchung der pH-Wert-Abhängigkeit der Extraktion von Platin aus einer wässrigen Kaliumtetrachloroplatinat-Lösung (0,1 mmol/l) mittels 1-(4-Bromphenyl)-3-undecyl-imidazoliumbis(trifluoromethylsulfonyl)imid und 1-(4-Ethoxyphenyl)-3-undecyl-imidazoliumbis(trifluoromethylsulfonyl)imid werden verschiedene wässrige Lösungen mit definiertem pH-Wert bereit gestellt. Jeweils 30 ml der wässrigen Lösung werden mit 100 µl ionischer Flüssigkeit versetzt und 2 Stunden mit Hilfe eines Vibramax 100 von Heidolph bei 1200 rpm in Bewegung gehalten. Es werden nach einem betimmten Zeitintervall Proben aus der wässrigen Phase entnommen und mit jeweils 10 µl konzentrierter $HNO_3$ versetzt. Die Konzentration der Kationen wird mittels ICP-MS ermittelt.

Tabelle 4: Extraktionsverhältnis E in % bei unterschiedlichen pH-Werten für 1-(4-Bromphenyl)-3- undecyl-imidazoliumbis(trifluoromethylsulfonyl)imid und 1-(4-Ethoxyphenyl)-3- undecyl-imidazoliumbis(trifluoromethylsulfonyl)imid

| 1-(4-Bromphenyl)-3-undecyl-imidazoliumbis(trifluoromethylsulfonyl)imid | | 1-(4-Ethoxyphenyl)-3-undecyl-imidazoliumbis(trifluoromethylsulfonyl)imid | |
|---|---|---|---|
| pH | E% | pH | E% |
| 7,2 | 85,1 | 7,2 | 75 |
| 2,6 | 73,7 | 2,6 | 51 |
| 2,1 | 63,0 | - | - |
| 1,2 | 61,1 | 1,2 | 40 |

Die erfindungsgemäße Extraktion ist nicht nur im neutralen sondern auch im sauren Bereich möglich. Wie aus Tabelle 4 zu entnehmen ist, sinkt die Extraktionsleistung über den gesamten pH-Bereich bei 1-(4-Ethoxyphenyl)-3-undecylimidazoliumbis-(trifluoromethylsulfonyl)imid um 47 % und bei 1-(4-Bromphenyl)-3-undecyl-imidazoliumbis(trifluoromethylsulfonyl)imid um gerade einmal 29%. Man kann somit von einer stabilen Extraktionsleistung über den gesamten pH-Bereich sprechen.

Beispiel 4 - Extraktion verschiedener Metalle

Zur Untersuchung der Extraktion weiterer Metalle werden exemplarisch Iridium und Europium aus einer wässrigen Lösung der Konzentration 0,1 mmol/l des jeweiligen Metalls ($IrCl_3$ bzw. $EuCl_3$) mittels 1-(4-Bromphenyl)-3-undecylimidazoliumbis-(trifluoromethylsulfonyl)imid extrahiert. Dazu werden zwei verschiedene wässrige Lösungen (pH ca. 6,9) bereit gestellt und zu jeweils 30 ml der wässrigen Lösung werden 100 $\mu$l der ionischen Flüssigkeit gegeben. Die Gemische werden 2 Stunden mit Hilfe eines Vibramax 100 von Heidolph bei 1200 rpm in Bewegung gehalten. Nach einem bestimmten Zeitintervall werden aus der wässrigen Phase Proben entnommen und mit jeweils 10 $\mu$l konzentrierter $HNO_3$ versetzt. Die Konzentration der Kationen wird mittels ICP-MS ermittelt.

Tabelle 5: Extraktionsverhältnis E in % für 1-(4-Bromphenyl)-3-undecyl-imidazoliumbis(trifluoromethylsulfonyl)imid

| Lösung | E% |
|---|---|
| $IrCl_3$-Lösung | 75 |
| $EuCl_3$-Lösung | 61 |

Tabelle 5 zeigt, dass nicht nur Platin, sondern auch andere Metalle mit dem erfindungsgemäßen Verfahren extrahiert werden können. Weiterhin wird ersichtlich, dass das erfindungsgemäße Verfahren nicht nur für Schwermetalle wie z.B. Iridium angewendet werden kann, sondern auch sehr gute Ergebnisse für die Extraktion von Seltenen Erden und Actinoiden, wie z.B. Europium, zeigt.

Beispiel 5 - Selektive Extraktion (I)

Zur Untersuchung der selektiven Metallextraktion wird eine wässrige Lösung, die eine Mischung aus Nickelnitrat und Kaliumhexachloroplatinat mit einer Metallkonzentration von je 0,1 mmol/l enthält, vorbereitet. Der pH-Wert der Lösung liegt bei ca. 6,9. 30 ml dieser Mischung werden mit 100 $\mu$l 1-(4-Bromphenyl)-3-undecyl-imidazoliumbis(trifluormethylsulfonyl)imid versetzt. Das Gemisch wird 2 Stunden mit Hilfe eines Vibramax 100 von Heidolph bei 1200 rpm in Bewegung gehalten. Nach einem bestimmten Zeitintervall werden aus der wässrigen Phase Proben entnommen und mit jeweils 10 $\mu$l konzentrierter $HNO_3$ versetzt. Die Konzentration der Kationen wird mittels ICP-MS ermittelt.

Tabelle 6: Extraktionsverhältnis E in % für 1-(4-Bromphenyl)-3-undecyl-imidazolium-bis(trifluoromethylsulfonyl)imid bei einer Mischung aus Ni- und Pt-Salzen

| Metall | E% |
|---|---|
| Pt | 96.1 |
| Ni | 0 |

Tabelle 6 zeigt deutlich, dass mit dem erfindungsgemäßen Verfahren eine selektive Extraktion möglich ist. Aus dem Gemisch aus Platin und Nickel wird lediglich Platin, mit einem Extraktionsverhältnis von 96,1 %, extrahiert, während Nickel in der wässrigen Phase zurückbleibt.

Beispiel 6 - Selektive Extraktion (II)

Zur Untersuchung der selektiven Metallextraktion werden 3 verschiedene Metallsalzlösungen bereit gestellt, die jeweils Nickelnitrat, Eisentrichlorid oder Iridiumtrichlorid mit einer Metallkonzentration von je 0,1 mmol/l enthalten. Der pH-Wert der Lösungen liegt bei 6,9. Je 30 ml dieser Mischungen werden mit je 100 $\mu$l 1-(4-Bromphenyl)-3-undecyl-imidazoliumbis(trifluormethylsulfonyl)imid bzw. 1-(4-Ethoxyphenyl)-3-undecyl-imidazoliumbis(trifluormethylsulfonyl)imid versetzt. Die Gemische werden 2 Stunden mit Hilfe eines Vibramax 100 von Heidolph bei 1200 rpm in Bewegung gehalten. Nach einem bestimmten Zeitintervall werden aus der wässrigen Phase Proben entnommen und mit jeweils 10 $\mu$l konzentrierter $HNO_3$ versetzt. Die Konzentration der Kationen wird mittels ICP-MS ermittelt.

Tabelle 7: Extraktionsverhältnis E in % für 1-(4-Bromphenyl)-3-undecyl-imidazoliumbis(trifluoromethylsulfonyl)imid und 1-(4-Ethoxyphenyl)-3-undecyl-imidazoliumbis(trifluormethylsulfonyl)imid

| | 1-(4-Bromphenyl)-3-undecyl-imidazoliumbis(trifluormethylsulfonyl)imid | 1-(4-Ethoxyphenyl)-3-undecyl-imidazoliumbis(trifluormethylsulfonyl)imid |
|---|---|---|
| Metall | E% | E% |
| Fe | 6,4 | 0 |
| Ni | 0,1 | 1,1 |
| Ir | 75,0 | 66,0 |

Tabelle 7 zeigt deutlich, dass die getesteten ionischen Flüssigkeiten selektiv nur Iridium aus der wässrigen Phase entfernen, hingegen bleiben Eisen und Nickel in den wässrigen Lösungen zurück. Somit ist mit dem erfindungsgemäßen Verfahren z.B. eine Abtrennung von Iridium aus einer Mischung von Iridium-, Eisen- und Nickelsalzen möglich.

Beispiel 7 - Selektive Extraktion aus Industriewässern (III)

Zur Untersuchung der selektiven Metallextraktion aus Industriewässern werden Industriewässer verwendet, die folgende Metalle enthalten: Ag, Al, Au, Ca, Cu, Fe, Ir, Mg, Ni, Pb, Pd, Pt, Rh, Si, Sn, Zn. Das Industriewasser ist stark sauer mit einem pH-Wert von 0,41. 30 ml des Industrieabwassers werden mit 100 μL einer ionischen Flüssigkeit (IL) versetzt und mit einem GFL 3005 Schüttelapparat bei 300 U/min bei Raumtemperatur geschüttelt. Kurz nach Zugabe der IL zum Industriewasser und nach einer Inkubationszeit von 2 Stunden werden aus der wässrigen Phase Proben entnommen. Parallel zu den Proben wird eine Blindprobe mitgeführt.

Folgende ionische Flüssigkeiten werden im Experiment verwendet: 1-(4-Methoxyphenyl)-3-undecyl-imidazoliumbis(trifluormethylsulfonyl)imid, 1-(4-Bromphenyl)-3-undecyl-imidazoliumbis(trifluormethylsulfonyl)imid, 1-(2-Methoxy-4-nitrophenyl)-3-undecyl-imidazoliumbis(trifluormethylsulfonyl)imid sowie zum Vergleich die kommerziell erhältliche ionische Flüssigkeit 1-Butyl-3-Methyl-imidazoliumbis(trifluormethylsulfonyl)imid [BMIM][$N(Tf)_2$].

Im Gegensatz zu den erfindungsgemäßen ionischen Flüssigkeiten, löst sich [BMIM][$N(Tf)_2$] vollständig in der wässrigen Phase. Eine Entmischung kann nicht beobachtet werden. Bei den erfindungsgemäßen ionischen Flüssigkeiten kann eine Farbänderung von den originalen gelb-braun-Tönen in dunklere Brauntöne beobachtet werden.

Tabelle 8: Extraktionsergebnisse für verschiedene ionischen Flüssigkeiten aus sauren Industriewässern (in mg/l)

| | 1-(2-Methoxy-4-nitrophenyl)-3-undecyl-imidazoliumbis-(trifluormethylsulfonyl)imid | | 1-(4-Methoxyphenyl)-3-undecyl-imidazoliumbis-(trifluormethylsulfonyl)-imid | | 1-(4-Bromphenyl)-3-undecyl-imidazoliumbis-(trifluormethylsulfonyl)-imid | |
|---|---|---|---|---|---|---|
| Element | 0h | 2h | 0h | 2h | 0h | 2h |
| Mg | 2,4 | 2,4 | 2,3 | 2,3 | 2,4 | 2,4 |
| Al | 10,6 | 10,2 | 10,7 | 10,4 | 10,7 | 10,6 |
| Si | 4,0 | 3,1 | 4,8 | 3,7 | 4,0 | 4,5 |
| Ca | 12,9 | 12,5 | 12,5 | 12,2 | 12,5 | 12,5 |
| Fe | 41,2 | 39,7 | 40,8 | 40,4 | 40,7 | 40,6 |
| Ni | 9,8 | 9,8 | 10,0 | 10,0 | 9,8 | 9,9 |
| Cu | 1960 | 1950 | 1980 | 1965 | 1965 | 1950 |
| Zn | 2,0 | 2,0 | 2,1 | 2,0 | 2,1 | 2,0 |
| Rh | 7,5 | 7,5 | 7,6 | 7,4 | 7,7 | 7,4 |
| Pd | 60,0 | 57,4 | 55,2 | 54,7 | 55,4 | 37,1 |
| Ag | 0,7 | 0,7 | 0,7 | 0,7 | 0,7 | 0,3 |
| Sn | 1,8 | 1,8 | 1,8 | 1,8 | 1,8 | 1,8 |
| Ir | 0,03 | 0,03 | 0,03 | 0,03 | 0,03 | 0,03 |
| Pt | 50,6 | 46,0 | 51,4 | 40,5 | 51,7 | 14,4 |
| Au | 28,9 | 12,0 | 18,4 | 13,0 | 27,3 | 2,0 |
| Pb | 62,0 | 62,2 | 62,2 | 63,0 | 59,8 | 62,7 |

| | Blindprobe | | 1-Butyl-3-Methyl-imidazoliumbis-(trifluormethylsulfonyl)-imid | |
|---|---|---|---|---|
| Element | 0h | 2h | 0h | 2h |
| Mg | 2,4 | 2,3 | 2,4 | 2,4 |
| Al | 10,6 | 10,5 | 10,5 | 10,5 |
| Si | 4,8 | 3,6 | 4,2 | 3,6 |
| Ca | 12,5 | 12,5 | 12,1 | 12,7 |
| Fe | 40,4 | 40,4 | 40,5 | 40,3 |
| Ni | 9,9 | 9,8 | 9,8 | 10,0 |
| Cu | 1950 | 1965 | 1950 | 1985 |
| Zn | 2,1 | 2,0 | 2,1 | 2,0 |
| Rh | 7,8 | 7,4 | 7,7 | 7,6 |
| Pd | 61,5 | 60,6 | 60,0 | 60,9 |
| Ag | 0,7 | 0,7 | 0,7 | 0,7 |
| Sn | 1,8 | 1,8 | 1,8 | 1,8 |
| Ir | 0,03 | 0,03 | 0,03 | 0,03 |
| Pt | 53,6 | 52,9 | 53,1 | 54,0 |
| Au | 41,9 | 41,8 | 40,6 | 42,9 |
| Pb | 62,1 | 60,8 | 60,7 | 62,1 |

Vergleicht man die konventionelle ionische Flüssigkeit [BMIM][N(Tf)$_2$] mit der Blindprobe, so erkennt man, dass sie komplett inaktiv bezüglich der Metallextraktion aus stark sauren Industriewässern ist. Dagegen zeigen die erfindungsgemäßen ionischen Flüssigkeiten auch im stark Sauren eine Aktivität. So kann mit 1-(2-Methoxy-4-nitrophenyl)-3-undecyl-imidazoliumbis(trifluormethylsulfonyl)imid Au, mit 1-(4-Methoxyphenyl)-3-undecyl-imidazoliumbis(trifluormethylsulfonyl)imid Au und Pt und mit 1-(4-Bromphenyl)-3-undecyl-imidazoliumbis-(trifluormethylsulfonyl)imid Au, Pt und Pd extrahiert werden. Es ist denkbar diese Selektivität für eine Trennung der Metalle in einer Extraktionskaskade zu nutzen. Durch Anwendung von1-(2-Methoxy-4-nitrophenyl)-3-undecyl-imidazoliumbis-(trifluormethylsulfonyl)imid ist es möglich Au abzutrennen, gefolgt von 1-(4-Methoxyphenyl)-3-undecyl-imidazoliumbis(trifluormethylsulfonyl)imid (Abtrennung von Pt) und 1-(4-Bromphenyl)-3-undecyl-imidazoliumbis-(trifluormethylsulfonyl)imid (Abtrennung von Pd).

Synthese der verwendeten ionischen Flüssigkeiten

1-Phenyl-3-butyl-1H-imidazoliumbis(trifluoromethyl)sulfonylimid ($C_{15}H_{17}F_6N_3O_4S_2$, 481,434 g/mol)

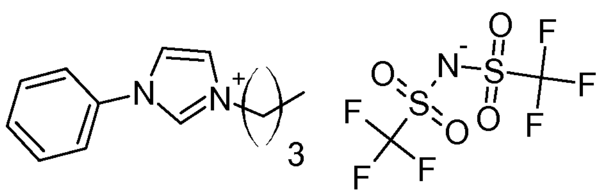

Es werden 2,74 g (8,4 mmol) 1-Phenyl-3-butylimidazoliumiodid und 2,88 g (10 mmol) Lithiumbis(trifluoromethylsulfonyl)amid in einem Methanol-WasserGemisch gelöst und mit 10 ml Dichlormethan versetzt. Die Reaktionsmischung wird für 24 Stunden bei Raumtemperatur gerührt und die organische Phase wird anschließend abgetrennt. Nach dem Entfernen des Lösungsmittels erhält man eine ölige Flüssigkeit (Ausbeute 97 %, 3,9 g).

Thermische Stabilität: Zersetzungsbeginn: 305 °C, Wendepunkt: 435 °C $^1$H-NMR (300 MHz, $CDCl_3$, ppm): 9.00 (1H, s, NCHN), 7.59 (1H, m, NCHC), 7.49 (6H, m, CH arom., NCHC), 4.22 (2H, t, J=7.6 Hz, N-$CH_2$), 1.84 (2H, m, $CH_2$), 1.34 (2H, m, $CH_2$), 0.89 (3H, t, J=7.2 Hz, $CH_3$)
$^{13}$C-NMR (75.5 MHz, $CDCl_3$, ppm): 134.2 (C), 133.8 (NCHN), 130.5 (CH), 123,4 (CH), 122.0 (CH), 121.7 (CH), 50.4 ($CH_2$), 31.9 ($CH_2$), 19.3 ($CH_2$), 13.2 ($CH_3$)
Elementaranalyse ($C_{15}H_{17}F_6N_3O_4S_2$):

berechnet: C 37,42 %, H 3,56 %, N 8,73 %, S 13,32 %
gefunden: C 37,59 %, H 3,61 %, N 8,94 %, S 12,91 %

<u>1-Phenyl-3-hexyl-1H-imidazoliumbis(trifluoromethyl)sulfonylimid</u> ($C_{17}H_{21}F_6N_3O_4S_2$, 509,487 g/mol)

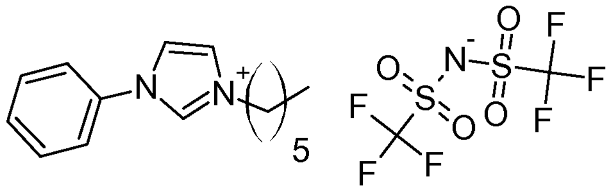

Es werden 3,42 g (9,6 mmol) 1-Phenyl-3-hexylimidazoliumiodid und 3,31 g (11,5 mmol) Lithiumbis(trifluoromethylsulfonyl)amid in 100 ml Methanol-Wasser-Gemischt gelöst und mit 10 ml Dichlormethan versetzt. Die Reaktionsmischung wird für 24 Stunden bei Raumtemperatur gerührt und die organische Phase wird anschließend abgetrennt. Nach dem Entfernen des Lösungsmittels erhält man eine ölige Flüssigkeit (Ausbeute 98 %, 4,81 g).

Thermische Stabilität: Zersetzungsbeginn: 308 °C, Wendepunkt: 440 °C
$^1$H-NMR (300 MHz, $CDCl_3$, ppm): 9.01 (1H, s, NCHN), 7.59 (1H, m, NCHC), 7.49 (6H, m, CH arom., NCHC), 4.22 (2H, t, J=7.7 Hz, N-$CH_2$), 1.86 (2H, m, $CH_2$), 1.25 (6H, m 3x$CH_2$), 0.79 (3H, t, J=6.9 Hz, $CH_3$)
$^{13}$C-NMR (75.5 MHz, $CDCl_3$, ppm): 134.3 (C), 133.8 (NCHN), 130.6 (CH), 123.3 (CH), 122.0 (CH), 121.9 (CH), 121.7 (CH), 50.6 ($CH_2$), 30.9 ($CH_2$), 29.9 ($CH_2$), 25.7 ($CH_2$), 22.2 ($CH_2$), 13.8 ($CH_3$)
Elementaranalyse ($C_{17}H_{21}F_6N_3O_4S_2$):

berechnet: C 40,08 %, H 4,15 %, N 8,25 %, S 12,59 %
gefunden: C 40,16 %, H 3,81 %, N 8,37 %, S 12,68 %

<u>1-Phenyl-3-undecyl-1H-imidazoliumbis(trifluoromethyl)sulfonylimid</u> ($C_{22}H_{31}F_6N_3O_4S_2$, 579,619 g/mol)

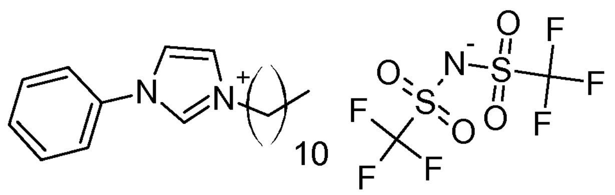

Es werden 5,76 g (13,5 mmol) 1-Phenyl-3-undecylimidazoliumiodid und 4,65 g (16,2 mmol) Lithiumbis(trifluoromethylsulfonyl)amid in 100 ml Methanol-Wasser-Gemischt gelöst und mit 10 ml Dichlormethan versetzt. Die Reaktionsmischung wird für 24 Stunden bei Raumtemperatur gerührt und die organische Phase wird anschließend abgetrennt. Nach dem Entfernen des Lösungsmittels erhält man eine ölige Flüssigkeit (Ausbeute 79 %, 6,2 g).
$^1$H-NMR (300 MHz, $CDCl_3$, ppm): 9.12 (1H, s, NCHN), 7.60 (1H, m, NCHC), 7.50 (6H, m, NCHC, CH arom.), 4.25 (2H, t, J=7.7 Hz, N-$CH_2$), 1.87 (2H, m, $CH_2$), 1.22 (16H, m, 8x$CH_2$), 0,79 (3H, t, J=6.8 Hz, $CH_3$)
$^{13}$C-NMR (75.5 MHz, $CDCl_3$, ppm): 134.3 (NCHN), 133.9 (C), 130.6 (CH), 123.3 (CH), 122,.0 (CH), 121.6 (CH), 50.7 (N-$CH_2$), 31.8 ($CH_2$), 30.1 ($CH_2$), 29.5 ($CH_2$), 29.4 ($CH_2$), 29.3 ($CH_2$), 29.2 ($CH_2$), 28.8 ($CH_2$), 26.1 ($CH_3$)
Elementaranalyse ($C_{22}H_{31}F_6N_3O_4S_2 \cdot 0.25EtOAc$):

berechnet: C 45,93 %, H 5,53 %, N 6,97 %, S 10,64 %
gefunden: C 46,16 %, H 4,87 %, N 6,97 %, S 9,63 %

1-Phenyl-3-tetradecyl-1H-imidazoliumbis(trifluoromethyl)sulfonylimid ($C_{25}H_{37}F_6N_3O_4S_2$, 621,699 g/mol)

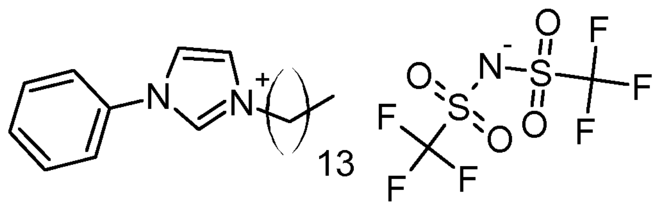

Es werden 2,11 g (5 mmol) 1-Phenyl-3-tetradecylimidazoliumbromid und 1,72 g (6 mmol) Lithiumbis(trifluoromethylsulfonyl)amid in 30 ml Methanol-Wasser-Gemischt gelöst und mit 10 ml Dichlormethan versetzt. Die Reaktionsmischung wird für 24 Stunden bei Raumtemperatur gerührt und die organische Phase wird anschließend abgetrennt. Nach dem Entfernen des Lösungsmittels erhält man eine ölige Flüssigkeit (Ausbeute 93 %, 2,89 g).
$^1$H-NMR (300 MHz, $CDCl_3$, ppm): 9.01 (1H, s, NCHN), 7.60 (1H, t, J=1.9 Hz, NCHC), 7.49 (6H, m, NCHC, CH arom.), 4.23 (2H, t, J=7.6 Hz, N-$CH_2$), 1.86 (2H, m, $CH_2$), 1.22 (22H, m, 11x$CH_2$), 0.79 ppm (3H, t, J=6.9 Hz, $CH_3$)
$^{13}$C-NMR (75.5 MHz, $CDCl_3$, ppm): 134.3 (C arom.), 133.9 (NCHN), 130.6 (CH), 123.3 (CH), 122.1 (CH), 121.7 (CH), 50.7 (N-$CH_2$), 31.9 ($CH_2$), 30.1 ($CH_2$), 29.6 ($CH_2$), 29.5 ($CH_2$), 29.4 ($CH_2$), 29.3 ($CH_2$), 28.9 ($CH_2$), 26.1 ($CH_2$), 22.6 ($CH_2$), 14.1 ($CH_3$)
Elementaranalyse ($C_{25}H_{37}F_6N_3O_4S_2$):

berechnet: C 48,30 %, H 6,00 %, N 6,76 %, S 10,32 %
gefunden: C 48,48 %, H 6,26 %, N 6,94 %, S 10,20 %

1-(4-Methoxyphenyl)-3-methyl-1H-imidazoliumbis(trifluoromethyl)sulfonylimid ($C_{13}H_{13}F_6N_3O_5S_2$, 469,379 g/mol)

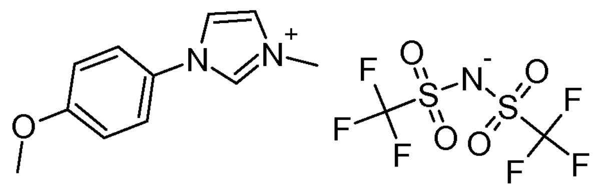

Man löst 8,68 g (0,027 mol) 1-(4-Methoxyphenyl)-3-methylimidazoliumiodid und 7,8 g (0,027 mol) Lithiumbis(trifluoromethylsulfonyl)amid in 160 ml Wasser und setzt 25 ml Dichlormethan hinzu. Nach 1 Stunde Rühren bei Raumtemperatur wird die organische Phase abgetrennt und am Rotationsverdampfer eingeengt. Das flüssige Produkt wird in 100 % Ausbeute erhalten.

Thermische Stabilität: Zersetzungsbeginn: 305 °C, Wendepunkt: 460 °C $^1$H-NMR (300 MHz, $d^6$-DMSO, ppm): 9.63 (1H, s, NCHN), 8.20 (1H, m, NCCH), 7.91 (1H, m, NCCH), 7.66 (2H, m, CH arom.), 7.21 (2H, m, CH arom.), 3.93 (3H, s, N-$CH_3$), 3.85 (3H, s, $OCH_3$)
$^{13}$C-NMR (75.5 MHz, $d^6$-DMSO, ppm): 160.0 (C arom.), 135.7 (NCHN), 127.9 (C arom.), 124.2 (CH), 123.5 (2CH), 121.3 (CH), 115.2 (2CH), 55.7 (Ar-$OCH_3$), 36.0 (N-$CH_3$)
Elementaranalyse ($C_{13}H_{13}F_6N_3O_5S_2$)
berechnet: C 33,26 %, H 2,79 %, N 8,95 %, S 13,66 %
gefunden: C 33,08 %, H 2,77 %, N 8,83 %, S 13,70 %

1-(4-Methoxyphenyl)-3-butyl-1H-imidazoliumbis(trifluoromethyl)sulfonylimid

($C_{16}H_{19}FN_3O_5S_2$, 511,459 g/mol)

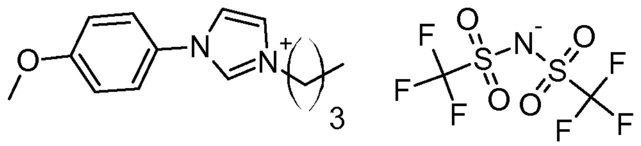

Man löst 9,69 g (0,027 mol) 1-(4-Methoxyphenyl)-3-butyl-1H-imidazoliumiodid und 9,32 g Lithiumbis(trifluoromethylsulfonyl)amid in 160 ml Wasser und setzt 25 ml Dichlormethan hinzu. Nach 20 Stunden Rühren bei Raumtemperatur wird die organische Phase abgetrennt und am Rotationsverdampfer eingeengt. Das flüssige Produkt wird in 100 % Ausbeute erhalten.

Thermische Stabilität: Zersetzungsbeginn: 289 °C, Wendepunkt: 460 °C
$^1$H-NMR (300 MHz, d$^6$-DMSO, ppm): 9.72 (m, 1 H, NC*H*N), 8.24 (m, 1 H, NC*H*C), 8.02 (m, 1 H, NC*H*C), 7.72 (d, J=9 Hz, 2 H, arom. *C*H), 7.21 (d, J=9 Hz, 2 H, arom. *C*H), 4.25 (t, J=7.2 Hz, 2 H, N-C*H*$_2$), 3.86 (s, 3 H, OC*H*$_3$), 1.89 (m, 2 H, C*H*$_2$), 1.35 (m, 2 H, C*H*$_2$), 0.95 (t, J=7.4 Hz, 3 H, C*H*$_3$)
$^{13}$C-NMR (75.5 MHz, d$^6$-DMSO, ppm): 160.0 (arom. *C*), 135.1 (arom. *C*H), 127.9 (arom. *C*), 123.5 (arom. *C*H), 123.1 (arom. *C*H), 121.6 (arom. *C*H), 115.1 (arom. *C*H), 55.7 (O*C*H$_3$), 49.1 (N-*C*H$_2$), 31.1 (*C*H$_2$), 18.9 (*C*H$_2$), 13.2 (*C*H$_3$)
Elementaranalyse ($C_{16}H_{19}FN_3O_5S_2$)
berechnet: C 37,57 %, H 3,74 %, N 8,22 %, S 12,54 %
gefunden: C 37,69 %, H 3,54 %, N 8,53 %, S 12,50 %

<u>1-(4-Methoxyphenyl)-3-hexyl-1H-imidazoliumbis(trifluoromethyl)sulfonylimid</u> ($C_{18}H_{23}F_6N_3O_5S_2$, 539,513 g/mol)

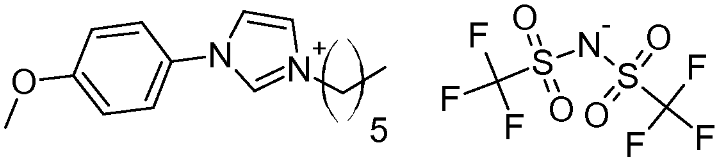

Man löst 13,25 g (0,036 mol) 1-(4-Methoxyphenyl)-3-hexyl-1H-imidazoliumbromid und 13,45 g Lithiumbis(trifluoromethylsulfonyl)amid in 160 ml Wasser und setzt 25 ml Dichlormethan hinzu. Nach 20 Stunden Rühren bei Raumtemperatur wird die organische Phase abgetrennt und am Rotationsverdampfer eingeengt. Das flüssige Produkt wird in 100 % Ausbeute erhalten.

Thermische Stabilität: Zersetzungsbeginn: 314 °C, Wendepunkt: 460 °C
$^1$H-NMR (300 MHz, d$^6$-DMSO, ppm): 9.71 (1H, s, NCHN), 8.24 (1H, m, NCHC), 8.02 (1H, m, NCHC), 7.72 (2H, d, J=9 Hz, CH arom.), 7.21 (2H, d, J=9 Hz, CH arom.), 4.24 (2H, q, J=7 Hz, N-CH$_2$), 3.86 (3H, s, OCH$_3$), 1.90 (2H, m, CH$_2$), 1.33 (6H, m, 3xCH$_2$), 0.89 (3H, m, CH$_3$)
$^{13}$C-NMR (75.5 MHz, d$^6$-DMSO): 160.0 (C-Aromat), 135.0 (NCHN), 127.9 (C arom.), 123.5 (2CH), 123.1 (CH), 121.5 (CH), 115.1 (2CH), 55.7 (OCH$_3$), 49.3 (N-CH$_2$), 30,6 (CH$_2$), 29.12 (CH$_2$), 25.2 (CH$_2$), 21.8 (CH$_2$), 13.8 (CH$_3$)
Elementaranalyse ($C_{18}H_{23}F_6N_3O_5S_2$)
berechnet: C 40,07 %, H 4,30 %, N 7,79 %, S 11,89 %
gefunden: C 39,91 %, H 4,45 %, N 7,71 %, S 11,71 %

<u>1-(4-Methoxyphenyl)-3-undecyl-1H-imidazoliumbis(trifluoromethyl)sulfonylimid</u> ($C_{23}H_{33}F_6N_3O_5S_2$, 609,646 g/mol)

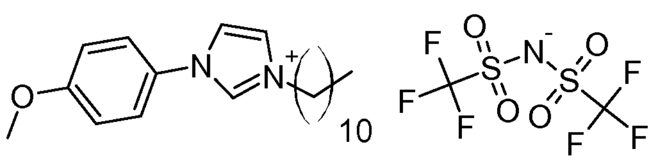

Man löst 2,861 g (6,26 mmol) 1-(4-Methoxyphenyl)-3-undecyl-1H-imidazoliumiodid und 2,16 g Lithiumbis(trifluoromethylsulfonyl)amid in einem Wasser-Methanol-Gemisch und setzt 10 ml Dichlormethan hinzu. Nach 20 Stunden Rühren bei Raumtemperatur wird die organische Phase abgetrennt und am Rotationsverdampfer eingeengt. Das flüssige

Produkt (Schmelzpunkt. 21 °C) wird in 100 % Ausbeute erhalten.

Thermische Stabilität: Zersetzungsbeginn: 262 °C, Wendepunkt: 440 °C

$^1$H-NMR (300 MHz, $d^6$-DMSO, ppm): 8.98 (1H, m, NCHN), 7.52 (1H, m, NCHC), 7.43 (3H, m, NCHC arom, CH), 6.96 (2H, d, J=9.06 Hz, arom, CH), 4.22 (2H, t, J=7.6 Hz, N-$CH_2$), 3.78 (3H, s, Ar-$OCH_3$), 1.86 (2H, m, $CH_2$), 1.22 (16H, m, 8x$CH_2$), 0.79 (3H, m, $CH_3$)

$^{13}$C-NMR (75.5 MHz, $d^6$-DMSO, ppm): 161.0 (C), 133.8 (NCHN), 127.2 (C), 123.6 (CH), 122.9 (CH), 121.8 (CH), 115.5 (CH), 55.7 ($CH_3$), 50.5 ($CH_2$), $CH_2$ 31.8 , 30.1 , 29.5 , 29.4 , 29.3 , 29.2 , 28.8 , 26.1 , 22.6 , 14.0 ($CH_3$)

Elementaranalyse ($C_{23}H_{33}F_6N_3O_5S_2$)

berechnet: C 45,31 %, H 5,46 %, N 6,89 %, S 10,52 %

gefunden: C 45,62 %, H 5,37 %, N 7,03 %, S 9,58 %

1-(4-Methoxyphenyl)-3-tetradecyl-1H-imidazoliumbis(trifluoromethyl)sulfonylimid ($C_{26}H_{39}F_6N_3O_5S_2$, 651,725 g/mol)

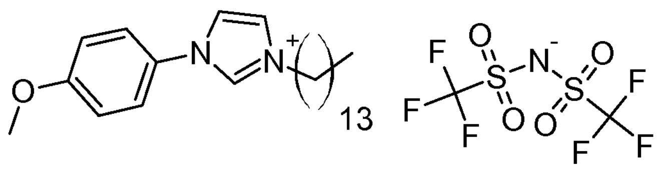

Man löst 4,061 g (8,99 mmol) 1-(4-Methoxyphenyl)-3-tetradecyl-1H-imidazolium-bromid und 2,58 g Lithium-bis(trifluoromethylsulfonyl)amid in einem Wasser-Methanol-Gemisch und setzt 10 ml Dichlormethan hinzu. Nach 20 Stunden Rühren bei Raumtemperatur wird die organische Phase abgetrennt und am Rotationsverdampfer eingeengt. Das flüssige Produkt wird in 92 % Ausbeute (5,41 g) erhalten.

$^1$H-NMR (300 MHz, $d^6$-DMSO, ppm): 9.69 (1H, s, NCHN), 8.24 (1H, s, NCHC), 8.01 (1H, s, NCHC), 7.70 (2H, d, J=8.9 Hz, Ar-H), 7.20 (2H, d, J=8.9 Hz, Ar-H), 4.22 (2H, t, J=7.4 Hz, N-$CH_2$), 3.85 (3H, s, Ar-$OCH_3$), 1.88 (2H, m, $CH_2$), 1.27 (22H, m, 11x$CH_2$), 0.85 (3H, m, $CH_3$)

$^{13}$C-NMR (75.5 MHz, $d^6$-DMSO, ppm): 159.9 (C), 135.0 (NCHN), 127.9 (C), 123.4 (2CH), 123.1 (CH), 121.4 (CH), 115.1 (2CH), 55.7 (Ar-$OCH_3$), 49.3 (N-$CH_2$), 31.3 29.1 28.9 28.8 28.7 28.4 25.5 22.1 ($CH_2$), 13.9 ($CH_3$)

Elementaranalyse ($C_{26}H_{39}F_6N_3O_5S_2$)

berechnet: C 47,92 %, H 6,03 %, N 6,45 %, S 9,84 %

gefunden: C 48,20 %, H 6,38 %, N 6,64 %, S 8,86 %

1-(2-Methoxyphenyl)-3-hexyl-1H-imidazoliumbis(trifluoromethyl)sulfonylimid ($C_{18}H_{23}F_6N_3O_5S_2$, 539,513 g/mol)

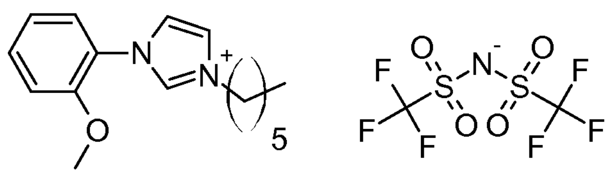

Man löst 1,34 g (3,5 mmol) 1-(2-Methoxyphenyl)-3-hexyl-1H-imidazoliumiodid und 1,2 g (4,2 mmol) Lithium-bis(trifluoromethylsulfonyl)amid in einem Gemisch aus 80 ml Wasser und 20 ml Methanol und setzt 25 ml Dichlormethan hinzu. Nach 24 Stunden Rühren bei Raumtemperatur wird die organische Phase abgetrennt und am Rotationsverdampfer eingeengt. Das flüssige Produkt wird in 96 % Ausbeute (1,8 g) erhalten.

Thermische Stabilität: Zersetzungsbeginn: 280 °C, Wendepunkt: 440 °C

$^1$H-NMR (300 MHz, $CDCl_3$, ppm): 8.84 (1H, s, NCHN), 7.45 (2H, m, NCHC), 7.42 (1H, m, CH arom.), 7.36 (1H, m, CH arom.), 7.04 (2H, m, CH arom.), 4.22 (2H, t, J=7.6 Hz, N-$CH_2$), 3.82 (3H, s, O-$CH_3$), 1.85 (2H, m, $CH_2$), 1.25 (6H, m, 3x$CH_2$), 0.80 (3H, t, J=6.9 Hz, $CH_3$)

$^{13}$C-NMR (75.5 MHz, $CDCl_3$, ppm): 151.9 (C arom), 135.9 (NCHN), 131.9 (CH), 123.3 (CH), 123.6 (CH), 122.9 (C arom.), 121.9 (CH), 121.5 (CH), 113.4 (CH), 56.1 (O-$CH_3$), 50.4 ($CH_2$), 30.9 ($CH_2$), 29.9 ($CH_2$), 25.6 ($CH_2$), 22.3 ($CH_2$), 13.7 ($CH_3$)

Elementaranalyse ($C_{18}H_{23}F_6N_3O_5S_2$)

berechnet: C 40,07 %, H 4,30 %, N 7,79 %, S 11,89 %

gefunden: C 40,11 %, H 4,13 %, N 7,93 %, S 11,92 %

1-(2-Methoxyphenyl)-3-undecyl-1H-imidazoliumbis(trifluoromethyl)sulfonylimid ($C_{23}H_{33}F_6N_3O_5S_2$, 609,646 g/mol)

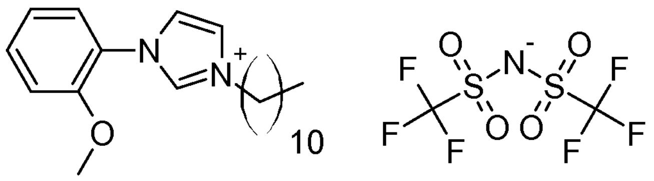

Man löst 0,94 g (2,6 mmol) 1-(2-Methoxyphenyl)-3-undecyl-1H-imidazoliumiodid und 0,88 g (3,1 mmol) Lithiumbis(trifluoromethylsulfonyl)amid in einem Gemisch aus 40 ml Wasser und 10 ml Methanol und setzt 10 ml Dichlormethan hinzu. Nach 24 Stunden Rühren bei Raumtemperatur wird die organische Phase abgetrennt und am Rotationsverdampfer eingeengt. Das flüssige Produkt (Schmelzpunkt 28 °C) wird in 84% Ausbeute (1,06 g) erhalten.

Thermische Stabilität: Zersetzungsbeginn: 190 °C, Wendepunkt: 430 °C
$^1$H-NMR (300 MHz, $d^6$-DMSO, ppm): 9.59 (1H, s, NCHN), 8.08 (1H, s, NCHC), 8.01 (1H, s, NCHC), 7.62 (2H, m, CH arom.), 7.40 (1H, m, CH arom.), 7.20 (1H, m, CH arom.), 4.27 (2H, t, J=7.2 Hz, N-$CH_2$), 3.89 (3H, s, $OCH_3$), 1.89 (2H, m, $CH_2$), 1.29 (16H, m, 8x$CH_2$), 0.86 (3H, m, $CH_3$)
$^{13}$C-NMR (75.5 MHz, $d^6$-DMSO, ppm): 152.2 (C), 137.1 (NCHN), 131.6 (CH), 126.2 (CH), 123.8 (CH), 123.4 (C), 122.2 (CH), 121.6 (CH), 113.2 (CH), 56.3 ($OCH_3$), 49.2 (N-$CH_2$), $CH_2$: 31.3, 29.2, 28.9, 28.8, 28.7, 28.3, 25.5, 22.1, 13.9 ($CH_3$)
Elementaranalyse ($C_{23}H_{33}F_6N_3O_5S_2$)
berechnet: C: 45,31 %, H: 5,46 %, N: 6,89 %, S: 10,52 %
gefunden: C: 45,34 %, H: 5,58 %, N: 7,24 %, S: 10,35 %

1-(2-Methoxyphenyl)-3-tetradecyl-1H-imidazoliumbis(trifluoromethyl)sulfonylimid ($C_{26}H_{39}F_6N_3O_5S_2$, 651,725 g/mol)

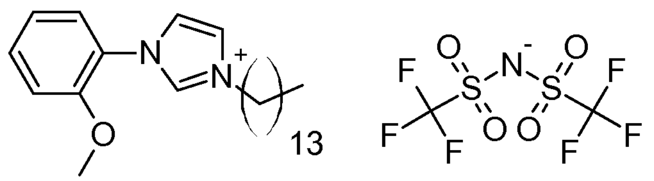

Man löst 2,25 g (5 mmol) 1-(2-Methoxyphenyl)-3-tetradecyl-1H-imidazoliumiodid und 1,72 g (6 mmol) Lithiumbis(trifluoromethylsulfonyl)amid in einem Gemisch aus 30 ml Wasser und 30 ml Methanol und setzt 10 ml Dichlormethan hinzu. Nach 24 Stunden Rühren bei Raumtemperatur wird die organische Phase abgetrennt und am Rotationsverdampfer eingeengt. Das flüssige Produkt wird in 94 % Ausbeute (3,08 g) erhalten.
$^1$H-NMR (300 MHz, $CDCl_3$, ppm): 8.85 (1H, s, NCHN), 7.54 (3H, m, CH arom., NCHC), 7.38 (1H, m, CH arom.), 7.03 (1H, m, CH arom.), 4.22 (2H, t, J=7,6 Hz, N-$CH_2$), 3.82 (3H, s, $OCH_3$), 1.85 (2H, m, $CH_2$), 1.20 (22H, m, $CH_2$), 0.79 (3H, t, J=6.8 Hz, $CH_3$),
$^{13}$C-NMR (75.5 MHz, $CDCl_3$, ppm): 152.0 (C), 135.9 (NCHN), 131.9 (CH), 125.3 (CH), 123.6 (CH), 122.9 (C), 121.9 (CH), 121.5 (CH), 112.6 (CH), 56.1 ($CH_3$), 50.4 ($CH_2$), 31.8 ($CH_2$), 30.0 ($CH_2$), 29.6 ($CH_2$), 29.5 ($CH_2$), 29.4 ($CH_2$), 29.3 ($CH_2$), 28.8 ($CH_2$), 28.7 ($CH_2$), 28.1 ($CH_2$), 26.0 ($CH_2$), 22.6 ($CH_2$), 14.0 ($CH_3$)
Elementaranalyse ($C_{26}H_{39}F_6N_3O_5S_2$)
berechnet: C 47,92 %, H 6,03 %, N 6,45 %, S 9,84 %
gefunden: C 48,14 %, H 5,84 %, N 6,55 %, S 8,96 %

1-(4-Ethoxyphenyl)-3-propyl-1H-imidazoliumbis(trifluoromethyl)sulfonylimid ($C_{16}H_{19}F_6N_3O_5S_2$, 511,459 g/mol)

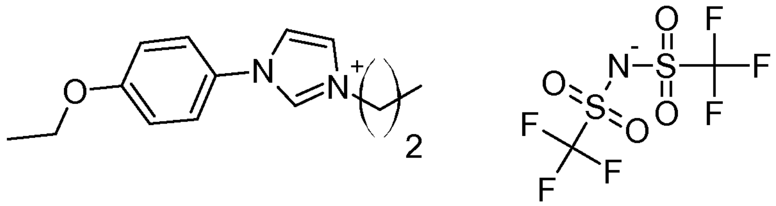

Man löst 7,91 g (0,025 mol) 1-(4-Ethoxyphenyl)-3-propyl-1H-limidazoliumbromid und 7,29 g Lithiumbis(trifluoromethylsulfonyl)amid in 100 ml Wasser und setzt 25 ml Dichlormethan hinzu. Nach 20 Stunden Rühren bei Raumtemperatur wird die organische Phase abgetrennt und am Rotationsverdampfer eingeengt. Das flüssige Produkt (Schmelzpunkt 20 °C) wird in 98 % Ausbeute (12,77 g) erhalten. Thermische Stabilität: Zersetzungsbeginn: 320 °C, Wendepunkt: 450 °C

$^1$H-NMR (300 MHz, $d^6$-DMSO, ppm): 9.71 (1H, s, NCHN), 8.24 (1H, m, NCHC), 8.01 (1H, m, NCHC), 7.69 (2H, d, J=9 Hz, Ar-H), 7.19 (2H, d, J=9 Hz, Ar-H), 4.21 (2H, t, J=7.4 Hz, N-$CH_2$), 4.13 (2H, q, J=6.8 Hz, O-$CH_2$), 1.92 (2H, m, $CH_2$), 1.37 (3H, t, J=6.9 Hz, $CH_3$), 0.94 (3H, t, J=7.4 , $CH_3$)

$^{13}$C-NMR (75.5 MHz, $d^6$-DMSO): 159.3 (C), 135.1 (NCHN), 127.7 (C), 123.5 (2CH), 123.1 (C), 121.6 (C), 115.5 (2CH), 63.7 ($CH_2$), 50.8 ($CH_2$), 22.7 ($CH_2$), 14.4 ($CH_3$), 10.4 ($CH_3$)

Elementaranalyse ($C_{16}H_{19}F_6N_3O_5S_2$)

berechnet: C 37,57 %, H 3,74 %, N 8,22 %, S 12,54 %

gefunden: C 37,46 %, H 3,81 %, N 8,41 %, S 12,72 %

1-(4-Ethoxyphenyl)-3-butyl-1H-imidazoliumbis(trifluoromethyl)sulfonylimid ($C_{17}H_{21}F_6N_3O_5S_2$, 525,486 g/mol)

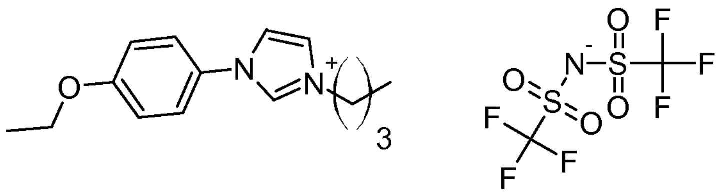

Man löst 10,07 g (0,031 mol) 1-(4-Ethoxyphenyl)-3-butyl-1H-limidazoliumbromid und 8,89 g Lithiumbis(trifluoromethylsulfonyl)amid in 160 ml Wasser und setzt 25 ml Dichlormethan hinzu. Nach 3 Stunden Rühren bei Raumtemperatur wird die organische Phase abgetrennt und am Rotationsverdampfer eingeengt. Das flüssige Produkt (Schmelzpunkt 6 °C) wird in 100% Ausbeute (16,08 g) erhalten.

Thermische Stabilität: Zersetzungsbeginn: 311 °C, Wendepunkt: 450 °C

$^1$H-NMR (300 MHz, $d^6$-DMSO, ppm): 9.71 (1H, s, NCHN), 8.23 (1H,s, NCHC), 8.01 (1H, s, NCHC), 7.69 (2H, d, J=9 Hz, CH arom.), 7.18 (2H, d, J=9 Hz, CH arom.), 4.25 (2H, t, J=7.2 , N-$CH_2$), 4.13 (2H, t, J=7 Hz, O-$CH_2$), 1.89 (2H, m, $CH_2$), 1.37 (5H, m, $CH_3$+$CH_2$), 0.95 (3H, t, J=7.4)

$^{13}$C-NMR (75.5 MHz, $d^6$-DMSO, ppm): 159.3 (C), 135.0 (NCHN), 123.5 (2CH), 123.1 (CH), 121.6 (CH), 115.5 (2CH), 63.7 ($CH_2$), 49.1 ($CH_2$), 31.2 ($CH_2$), 18.9 ($CH_2$), 14.4 ($CH_3$), 13.2 ($CH_3$)

Elementaranalyse ($C_{17}H_{21}F_6N_3O_5S_2$)

berechnet: C 38,86 %, H 4,03 %, N 8,00 %, S 12,20 %

gefunden: C 38,72 %, H 3,99 %, N 8,19 %, S 12,43 %

1-(4-Ethoxyphenyl)-3-pentyl-1H-imidazoliumbis(trifluoromethyl)sulfonylimid ($C_{18}H_{23}F_6N_3O_5S_2$, 539,513 g/mol)

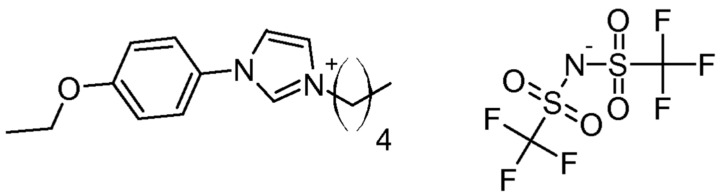

Man löst 10,29 g (0,03 mol) 1-(4-Ethoxyphenyl)-3-pentyl-1H-imidazoliumbromid und 8,71 g Lithiumbis(trifluoromethylsulfonyl)amid in 160 ml Wasser und setzt 25 ml Dichlormethan hinzu. Nach 1 Stunde Rühren bei Raumtemperatur wird die organische Phase abgetrennt und am Rotationsverdampfer eingeengt. Das flüssige Produkt (Glasübergang bei -58 °C) wird in 100 % Ausbeute (16,63 g) erhalten.

Thermische Stabilität: Zersetzungsbeginn: 307 °C, Wendepunkt: 440 °C
$^1$H-NMR (300 MHz, d$^6$-DMSO, ppm): 9.71 (1H, s, NCHN), 8.24 (1H, s, NCHC), 8.01 (1H, s, NCHC), 7.69 (2H, d, J=9 Hz, Ar-H), 7.19 (2H, d, J=8.9 Hz, Ar-H), 4.23 (2H, t, J=7.4 Hz, N-$CH_2$), 4.12 (2H, q, J=6.9 Hz, O-$CH_2$), 1.91 (2H, m, $CH_2$), 1.35 (7H, m, $CH_3$+2x$CH_2$), 0.91 (3H, t, J=7 Hz, $CH_3$)
$^{13}$C-NMR (75,5 MHz, d$^6$-DMSO, ppm): 159.3 (C), 135.0 (NCHN), 127.7 (C), 123.5 (2CH), 123.1 (CH), 121.6 (CH), 115.5 (2CH), 63.7 ($CH_2$), 49.3 ($CH_2$), 28.9 ($CH_2$), 27.7 ($CH_2$), 21.5 ($CH_2$), 14.4 ($CH_3$), 13.6 ($CH_3$)
Elementaranalyse ($C_{18}H_{23}F_6N_3O_5S_2$)
berechnet: C 40,07 %, H 4,30 %, N 7,79 %, S 11,89 %
gefunden: C 39,75 %, H 4,03 %, N 7,77 %, S 12,14 %

1-(4-Ethoxyphenyl)-3-hexyl-1H-imidazoliumbis(trifluoromethyl)sulfonylimid ($C_{19}H_{25}F_6N_3O_5S_2$, 553,539 g/mol)

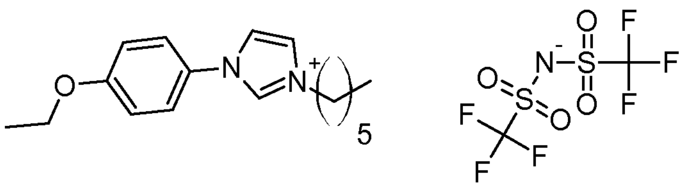

Man löst 11,85 g (0,034 mol) 1-(4-Ethoxyphenyl)-3-hexyl-1H-imidazoliumbromid und 9,63 g Lithiumbis(trifluoromethylsulfonyl)amid in 160 ml Wasser und setzt 25 ml Dichlormethan hinzu. Nach 20 Stunden Rühren bei Raumtemperatur wird die organische Phase abgetrennt und am Rotationsverdampfer eingeengt. Das flüssige Produkt (Schmelzpunkt 27 °C) wird in 99 % Ausbeute (18,45 g) erhalten. Thermische Stabilität: Zersetzungsbeginn: 321 °C, Wendepunkt: 440 °C
$^1$H-NMR (300 MHz, d$^6$-DMSO, ppm): 9.71 (1H, s, NCHN), 8.23 (1H, s, NCHC), 8.01 (1H, s, NCHC), 7.69 (2H, d, J=9 Hz, Ar-H), 7.19 (2H, d, J=9 Hz, Ar-H), 4.23 (2H, t, J=7.4 Hz, N-$CH_2$), 4.12 (2H, q, J=7 Hz, O-$CH_2$), 1.89 (2H, m, $CH_2$), 1.37 (3H, t, J=7 Hz), 1.32 (6H, m, 3x$CH_2$), 0.88 (3H, m, $CH_3$),
$^{13}$C-NMR (75.5 MHz, d$^6$-DMSO, ppm): 159.3 (C), 135.0 (NCHN), 127.7 (C), 123.5 (2CH), 123.1 (CH), 121.6 (CH), 115.5 (2CH), 63.7 (O-$CH_2$), 49.3 (N-$CH_2$), 30.6 ($CH_2$), 29.1 ($CH_2$), 25.2 ($CH_2$), 21.8 ($CH_2$), 21.8 ($CH_2$), 14.4 ($CH_3$), 13.7 ($CH_3$)
Elementaranalyse ($C_{19}H_{25}F_6N_3O_5S_2$)
berechnet: C 41,23 %, H 4,55 %, N 7,59 %, S 11,59 %
gefunden: C 41,25 %, H 4,62 %, N 7,82 %, S 11,68 %

1-(4-Ethoxyphenyl)-3-undecyl-1H-imidazoliumbis(trifluoromethyl)sulfonylimid ($C_{24}H_{35}F_6N_3O_5S_2$, 623,672 g/mol)

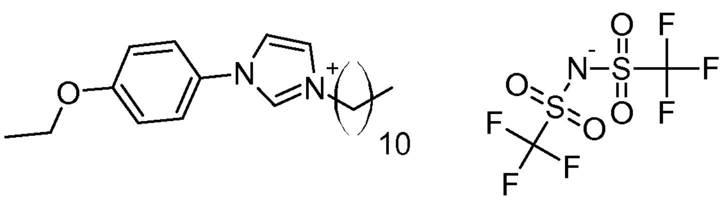

Man löst 5,71 g (0,012 mol) 1-(4-Ethoxyphenyl)-3-undecyl-1H-limidazoliumiodid und 4,18 g Lithiumbis(trifluoromethylsulfonyl)amid in 80 ml Wasser und setzt 15 ml Dichlormethan hinzu. Nach 20 Stunden Rühren bei Raumtemperatur wird die organische Phase abgetrennt und am Rotationsverdampfer eingeengt. Das flüssige Produkt wird in 100 % Ausbeute erhalten.
$^1$H-NMR (300 MHz, $CDCl_3$, ppm): 8.91 (1H, s, NCHN), 7.49 (1H, m, NCHC), 7.42 (1H, m, NCHC), 7.40 (2H, d, J=9.1 Hz, CH arom.), 6.95 (2H, d, J=9.1 Hz, CH arom.), 4.21 (2H, t, J=7.7 Hz, N-$CH_2$), 4.00 (2H, q, J=6.9 Hz, O-$CH_3$), 1.85 (2H, m, $CH_2$), 1.37 (3H, t, J=6.9 Hz, $CH_3$), 1.22 (16H, m, 8x$CH_2$), 0.79 (3H, t, J=6.9 Hz, $CH_3$)
$^{13}$C-NMR (75.5 MHz, $CDCl_3$, ppm): 160.5 (C-O), 133.8 (NCHN), 126.2 (C-N), 123.6 (2CH), 122.9 (CH), 121.9 (CH), 115.9 (CH), 64.1 (O-$CH_2$), 50.6 (N-$CH_2$), ($CH_2$: 31.8, 30.1, 29.5, 29.4, 29.3, 29.2, 28.9, 26.1, 22.6), 14.6 ($CH_3$), 14.1 ($CH_3$)
Thermische Stabilität: Zersetzungsbeginn: 295 °C, Wendepunkt: 440 °C
Elementaranalyse ($C_{24}H_{35}F_6N_3O_5S_2$)
berechnet: C 46,22 %, H 5,66 %, N 6,74 %, S 10,28 %
gefunden: C 46,15 %, H 4,78 %, N 6,91 %, S 9,99 %

<u>1-(4-Ethoxyphenyl)-3-tetradecyl-1H-imidazoliumbis(trifluoromethyl)sulfonylimid</u> ($C_{27}H_{41}F_6N_3O_5S_2$, 665,752 g/mol)

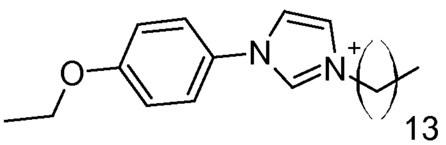

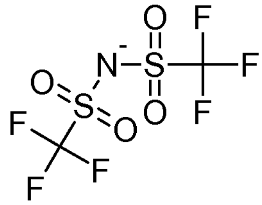

Man löst 1,923 g (4,13 mmol) 1-(4-Ethoxyphenyl)-3-tetradecyl-1H-imidazolium-bromid und 1,19 g Lithiumbis(trifluoromethylsulfonyl)amid in 50 ml Wasser und setzt 10 ml Dichlormethan hinzu. Nach 20 Stunden Rühren bei Raumtemperatur wird die organische Phase abgetrennt und am Rotationsverdampfer eingeengt. Das flüssige Produkt (Schmelzpunkt 34 °C) wird in 89 % Ausbeute (2,45 g) erhalten.
$^1$H-NMR (300 MHz, $d^6$-DMSO, ppm): 9.72 (1H, s, NCHN), 8.24 (1H, s, NCHC), 8.01 (1H, s, NCHC), 7.70 (2H, d, J=9 Hz, Ar-H), 7.18 (2H, d, J=9 Hz, Ar-H), 4.24 (2H, t, J=7.4 Hz, N-$CH_2$), 4.12 (2H, q, J=7 Hz, O-$CH_2$), 1.90 (2H, m, $CH_2$), 1.37 (3H, t, J=7 Hz, $CH_3$), 1.30 (24H, m, 12x$CH_2$), 0.86 (3H, m, $CH_3$)
$^{13}$C-NMR (75.5 MHz, $d^6$-DMSO, ppm): 159.3 (C), 134.9 (NCHN), 127.7 (C), 123.4 (2CH), 123.1 (CH), 121.6 (CH), 115.5 (2CH), 63.7 (O-$CH_2$), 49.3 (N-$CH_2$), 31.3 ($CH_2$), 29.2 ($CH_2$), 29.1 ($CH_2$), 29.0 ($CH_2$), 28.9 ($CH_2$), 28.8 ($CH_2$), 28.7 ($CH_2$), 28.4 ($CH_2$), 25.6 ($CH_2$), 22.1 ($CH_2$), 14.4 ($CH_3$), 13.8 ($CH_3$)
Elementaranalyse ($C_{27}H_{41}F_6N_3O_5S_2$)
berechnet: C 48,71 %, H 6,21 %, N 6,31 %, S 9,63 %
gefunden: C 48,86 %, H 6,38 %, N 6,49 %, S 9,82 %

<u>1-(2-Ethoxyphenyl)-3-butyl-1H-imidazoliumbis(trifluoromethyl)sulfonylamid</u> ($C_{17}H_{21}F_6N_3O_5S_2$, 525,486 g/mol)

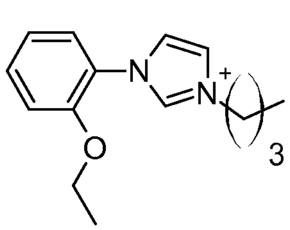

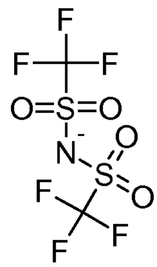

Man löst 5,73 g (15,4 mmol) 1-(2-Ethoxyphenyl)-3-butylimidazoliumiodid und 5,31 g (18,5 mmol) Lithiumbis(trifluoromethylsulfonyl)amid in 100 ml eines Methanol-Wasser-Gemisches und setzt 25 ml Dichlormethan hinzu. Nach 24 Stunden Rühren bei Raumtemperatur wird die organische Phase abgetrennt und am Rotationsverdampfer eingeengt. Das flüssige Produkt wird in 100 % Ausbeute (8,16 g) erhalten.

Thermische Stabilität: Zersetzungsbeginn: 270 °C , Wendepunkt: 401 °C
$^1$H-NMR (300 MHz, $CDCl_3$, ppm): 8.82 (1H, s, NCHN), 7.47 (1H, m, NCHC), 7.45 (1H, m, NCHC), 7.36 (2H, m, CH arom.), 7.01 (2H, m, CH arom.), 4.23 (2H, t, J=7.4 Hz, N-$CH_2$), 4.06 (2H, q, J=6.9 Hz, O-$CH_2$), 1.84 (2H, m, $CH_2$), 1.32 (2H, m, $CH_2$), 1.29 (3H, t, J=6.9 Hz, $CH_3$), 0.89 (3H, t, J=7.4 Hz, $CH_3$)
$^{13}$C-NMR (75.5 MHz, $CDCl_3$, ppm): 151.33 (C arom.), 135.8 (NCHN), 131.9 (CH), 125.3 (CH), 123.6 (CH), 122.9 (CH), 122.0 (CH), 121.3 (CH), 113.3 (CH), 64.8 ($CH_2$), 50.1 ($CH_2$), 31.9 ($CH_2$), 19.2 ($CH_2$), 14.2 ($CH_3$), 13.1 ($CH_3$) Elementaranalyse ($C_{17}H_{21}F_6N_3O_5S_2$)
berechnet: C 38.86 %, H 4.03 %, N 7.89 %, S 12.20 %
gefunden: C 38.15 %, H 4.35 %, N 7.92 %, S 11.65 %

1-(2-Ethoxyphenyl)-3-hexyl-1H-imidazoliumbis(trifluoromethyl)sulfonylamid ($C_{19}H_{25}F_6N_3O_5S_2$, 553.539 g/mol)

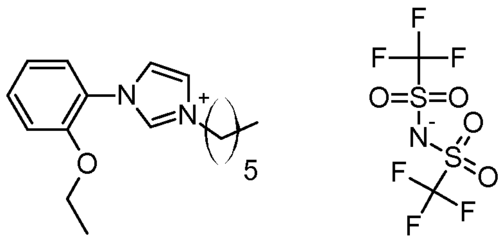

Man löst 5,13 g (12,8 mmol) 1-(2-Ethoxyphenyl)-3-hexylimidazoliumiodid und 4,41 g (15,4 mmol) Lithiumbis(trifluoromethylsulfonyl)amid in 100 ml eines Methanol-Wasser-Gemisches und setzt 25 ml Dichlormethan hinzu. Nach 24 Stunden Rühren bei Raumtemperatur wird die organische Phase abgetrennt und am Rotationsverdampfer eingeengt. Das flüssige Produkt wird in 86 % Ausbeute (6,11 g) erhalten.
Thermische Stabilität: Zersetzungsbeginn: 331°C, Wendepunkt: 439°C
$^1$H-NMR (300 MHz, $CDCl_3$, ppm): 8.84 (1H, s, NCHN), 7.46 (2H, m, CH arom.), 7.37 (2H, m, CH arom.), 7.04 (1H, s, NCHC), 7.01 (1H, s, NCHC), 4.23 (2H,t, J=7.4 Hz, N-$CH_2$), 4.07 (2H, q, J=6.9 Hz, O-$CH_2$), 1.85 (2H, m, $CH_2$), 1.30 (3H, t, J=6.9 Hz, $CH_3$), 1.25 (6H, m, 3x$CH_2$), 0.80 (3H, t, J=7.0 Hz, $CH_3$)
$^{13}$C-NMR (75.5 MHz, $CDCl_3$, ppm): 151.3 (C), 135.8 (NCHN), 131.9 (CH), 125.3 (CH), 123.6 , 122.9 (C), 121.9 (CH), 121.3 (CH), 113.3 (CH), 64.8 ($CH_2$), 50.4 ($CH_2$), 30.9 ($CH_2$), 29.9 ($CH_2$), 25.6 ($CH_2$), 22.2 ($CH_2$), 14.2 ($CH_3$), 13.8 ($CH_3$) Elementaranalyse ($C_{19}H_{25}F_6N_3O_5S_2$)
berechnet: C 41.23 %, H 4.55 %, N 7.59 %, S 11.59 %
gefunden: C 41.35 %, H 4.48 %, N 7.77 %, S 10.56 %

1-(2-Ethoxyphenyl)-3-undecyl-1H-imidazoliumbis(trifluoromethy)sulfonylamid ($C_{24}H_{35}F_6N_3O_5S_2$, 623.672 g/mol)

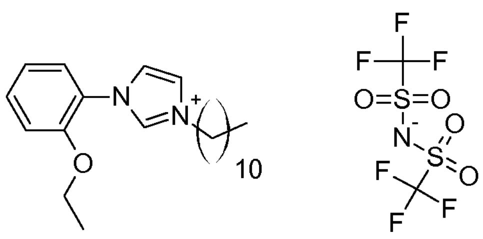

Man löst 4,9 g (10,4 mmol) 1-(2-Ethoxyphenyl)-3-undecylimidazoliumiodid und 3,58 g (12,5 mmol) Lithiumbis(trifluoromethylsulfonyl)amid in 100 ml eines Methanol-Wasser-Gemisches und setzt 25 ml Dichlormethan hinzu. Nach 24 Stunden Rühren bei Raumtemperatur wird die organische Phase abgetrennt und am Rotationsverdampfer eingeengt. Das flüssige Produkt wird in 97 % Ausbeute (6,29 g) erhalten.
Thermische Stabilität: Zersetzungsbeginn: 240 °C , Wendepunkt: 425 °C
$^1$H-NMR (300 MHz, $CDCl_3$, ppm): 8.86 (1H, s, NCHN), 7.46 (2H, s, NCHC), 7.37 (2H, m, CH arom.), 7.01 (2H, m, CH arom.), 4.23 (2H, t, J=7.4 Hz, N-$CH_2$), 4.07 (2H, q, J=6.8 Hz, O-$CH_2$), 1.85 (2H, m, $CH_2$), 1.30 (3H, t, J=6.9 Hz, $CH_3$), 1.20 (16H, m, 8x$CH_2$), 0.79 (3H, t, J=7.0 Hz, $CH_3$)

$^{13}$C-NMR (75.5 MHz, $CDCl_3$, ppm): 151.3 (C arom.),135.8 (NCHN), 131.9 (CH), 125.3 (CH), 123.6 (CH), 122.9 (C arom.), 121.9 (CH), 121.3 (CH), 113.4 (CH), 50.4 ($CH_2$), 31.8 ($CH_2$), 30.0 ($CH_2$), 29.5 ($CH_2$), 29.4 ($CH_2$), 29.2 ($CH_2$), 29.2 ($CH_2$), 29.1 ($CH_2$), 28.8 ($CH_2$), 25.9 ($CH_2$), 22.6 ($CH_2$), 14.2 ($CH_3$),14.0 ($CH_3$)
Elementaranalyse ($C_{24}H_{35}F_6N_3O_5S_2$)
berechnet: C 46.22 %, H 5.66 %, N 6.74 %, S 10.28 %
gefunden: C 46.26 %, H 5.50 %, N 6.90 %, S 10.24 %

1-(2-Ethoxyphenyl)-3-tetradecyl-1H-imidazoliumbis(trifluoromethyl)sulfonylamid ($C_{27}H_{41}F_6N_3O_5S_2$, 665.752 g/mol)

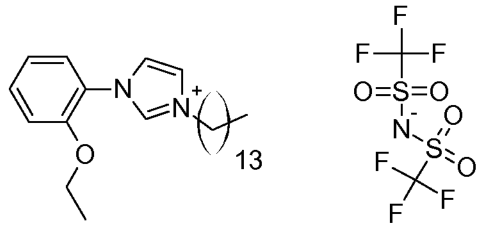

Man löst 2,65 g (5,7 mmol) 1-(2-Ethoxyphenyl)-3-tetradecylimidazoliumbromid und 1,96 g (6,8 mmol) Lithium-bis(trifluoromethylsulfonyl)amid in 100 ml eines Methanol-Wasser-Gemisches und setzt 25 ml Dichlormethan hinzu. Nach 24 Stunden Rühren bei Raumtemperatur wird die organische Phase abgetrennt und am Rotationsverdampfer eingeengt. Das flüssige Produkt wird in 78 % Ausbeute (2,97 g) erhalten.
$^1$H-NMR (300 MHz, $CDCl_3$, ppm): 8.83 (1H, s, NCHN), 7.45 (2H, m, NCHC), 7.37 (2H, m, CH arom.), 7.01 (2H, m, CH arom.), 4.23 (2H, t, J=7.6 Hz, N-$CH_2$), 4.07 (2H, q, J=6.9 Hz, O-$CH_2$), 1.85 (2H, m, $CH_2$), 1.30 (3H, t, J=6.9 Hz, $CH_3$), 1.20 (22H, m, 11x$CH_2$), 0.79 (3H, t, J=6.8 Hz, $CH_3$)
$^{13}$C-NMR (75.5 MHz, $CDCl_3$, ppm): 151.3 (C arom.), 135.8 (NCHN), 131.9 (CH), 125.3 (CH), 123.6 (CH), 121.9 (CH), 121.3 (CH), 113.4 (CH), 64.8 ($CH_2$), 50.4 ($CH_2$), 31.8 ($CH_2$), 30.0 ($CH_2$), 29.6 ($CH_2$), 29.5 ($CH_2$), 29.4 ($CH_2$), 29.3 ($CH_2$), 28.9 ($CH_2$), 25.9 ($CH_2$), 22.6 ($CH_2$), 14.2 ($CH_2$), 14.0 ($CH_2$),
Elementaranalyse ($C_{27}H_{41}F_6N_3O_5S_2$)
berechnet: C 48.71 %, H 6.21 %, N 6.31 %, S 9.63 %
gefunden: C 48.70 %, H 6.63 %, N 6.62 %, S 8.75 %

1-(4-Bromphenyl)-3-butyl-1H-imidazoliumbis(trifluoromethyl)sulfonylamid ($C_{15}H_{16}BrF_6N_3O_4S_2$, 560.329 g/mol)

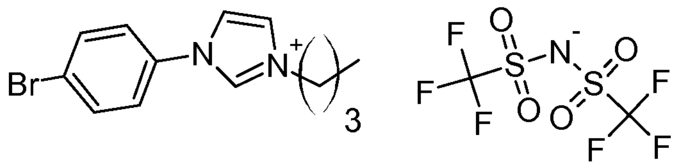

Es werden 4,42 g (0,011 mol) 1-(4-Bromphenyl)-3-butylimidazoliumiodid und 3,74 g Lithiumbis(trifluoromethylsulfonyl)amid in einem Wasser-Methanol-Gemisch gelöst und mit 10 ml Dichlormethan versetzt. Die Reaktionsmischung wird für 24 Stunden bei Raumtemperatur gerührt und die organische Phase wird anschließend abgetrennt. Nach dem Entfernen des Lösungsmittels erhält man das flüssige Produkt in 100 % Ausbeute (6,012 g).

Thermische Stabilität: Beginn der Zersetzung: 324 °C, Wendepunkt: 450 °C
$^1$H-NMR (300 MHz, $d^6$-DMSO, ppm): 9.83 (1H, s, NCHN), 8.33 (1H, s, NCHC), 8.05 (1H, s, NCHC), 7.90 (2H, d, J=8.6 Hz, CH arom.), 4,25 (2H, t, J=7.4 , N-$CH_2$), 1.88 (2H, m, $CH_2$), 1.34 (2H, m, $CH_2$), 0.94 (3H, t, J=7.4 Hz, $CH_3$) $^{13}$C-NMR (75.5 MHz, $d^6$-DMSO, ppm): 135.5 (NCHN), 134.1 (C arom.), 132.9 (2CH), 123.4 (2CH), 123.4 (CH), 122.3 (C arom.), 119.3 (CH), 49.3 ($CH_2$), 31.1 ($CH_2$), 18.9 ($CH_2$), 13.2 ($CH_3$)
Elementaranalyse ($C_{15}H_{16}BrF_6N_3O_4S_2$)
berechnet: C 32.15 %, H 2.88 %, N 7.50 %, S 11.45 %
gefunden: C 32.03 %, H: 2.55 %, N 7.78 %, S 11.27 %

1-(4-Bromphenyl)-3-hexyl-1H-imidazoliumbis(trifluoromethyl)sulfonylamid ($C_{17}H_{20}BrF_6N_3O_4S_2$, 588.383 g/mol)

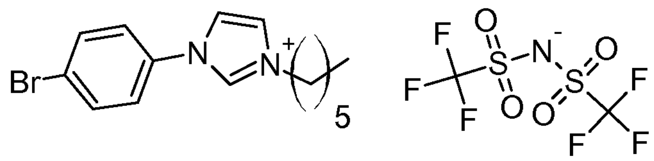

Es werden 2,966 g (6,8 mmol) 1-(4-Bromphenyl)-3-hexyl-1H-imidazoliumiodid und 2,33 g Lithiumbis(trifluoromethylsulfonyl)amid in einem Wasser-Methanol-Gemisch gelöst und mit 10 ml Dichlormethan versetzt. Die Reaktionsmischung wird für 24 Stunden bei Raumtemperatur gerührt und die organische Phase wird anschließend abgetrennt. Nach dem Entfernen des Lösungsmittels erhält man das Produkt (Schmelzpunkt 31 °C) in 100 % Ausbeute.

Thermische Stabilität: Beginn der Zersetzung: 304 °C, Wendepunkt: 450 °C
$^1$H-NMR (300 MHz, d$^6$-DMSO, ppm): 9.83 (1H, s, NCHN), 8.33 (1H, m, NCHC), 8.05 (1H, m, NCHC), 7.91 (2H, d, J=9 Hz, Ar-H), 7.77 (2H, d, J=9 Hz, Ar-H), 4.24 (2H, t, J=7 Hz, N-$CH_2$), 1.89 (2H, m, $CH_2$), 1.32 (6H, m, 3x$CH_2$), 0.88 (3H, t, J=6.5 Hz, $CH_3$)
$^{13}$C-NMR (75.5 MHz, d$^6$-DMSO): 135.5 (NCHN), 134.1 (C), 132.9 (CH), 123.9 (CH), 122.6 (C), 122.2 (CH), 121,1 (CH), 49.4 (N-$CH_2$), 30.6 ($CH_2$), 29.0 ($CH_2$), 25.2 ($CH_2$), 21.8 ($CH_2$), 13.8 ($CH_2$),
Elementaranalyse ($C_{17}H_{20}BrF_6N_3O_4S_2$)
berechnet: C 34.70 %, H 3.43 %, N 7.14 %, S 10.90 %
gefunden: C 34.77 %, H 3.35 %, N 7.41 %, S 10.15 %

1-(4-Bromphenyl)-3-undecyl-1H-imidazoliumbis(trifluoromethyl)sulfonylamid ($C_{22}H_{30}BrF_6N_3O_4S_2$, 658.516 g/mol)

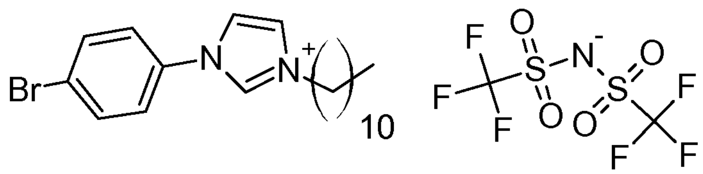

Es werden 4,38 g (9 mmol) 1-(4-Bromphenyl)-3-undecyl-1H-imidazoliumiodid und 2,99 g Lithiumbis(trifluoromethylsulfonyl)amid in einem Wasser-Methanol-Gemisch gelöst und mit Dichlormethan versetzt. Die Reaktionsmischung wird für 24 Stunden bei Raumtemperatur gerührt und die organische Phase wird anschließend abgetrennt. Nach dem Entfernen des Lösungsmittels erhält man das Produkt (Schmelzpunkt 35 °C) in 94 % Ausbeute (5,54 g).

Thermische Stabilität: Beginn der Zersetzung: 243 °C, Wendepunkt: 460 °C
$^1$H-NMR (300 MHz, d$^6$-DMSO, ppm): 9.83 (1H, s, NCHN), 8.33 (1H, m, NCHC), 8.05 (1H, m, NCHC), 7.91 (2H, d, J=8.7 Hz, CH arom.), 7.77 (2H, d, J=8.7 Hz, CH arom.), 4.24 (2H, t, J=7.2 Hz, N-$CH_2$), 1.89 (2H, m, $CH_2$), 1.28 (16H, m, 8x$CH_2$), 0.86 (3H, m, $CH_3$) $^{13}$C-NMR (75.5 MHz, d$^6$-DMSO, ppm): 135.5 (NCHN), 134.1 (C), 132.9 (2CH), 123.9 (2CH), 123.3 (CH), 121.6 (CH), 49.5 (N-$CH_2$), $CH_2$: 31.3, 29.1, 28.9, 28.8, 28.7, 28.4, 25.5, 22.1, 13.9 ($CH_3$)
Elementaranalyse ($C_{22}H_{30}BrF_6N_3O_4S_2$)
berechnet: C 40.13 %, H 4.59 %, N 6.38 %, S 9.74 %
gefunden: C 40.04 %, H 4.46 %, N 6.57 %, S 9.55 %

1-(4-Ethylphenyl)-3-methyl-1H-imidazoliumbis(trifluoromethyl)sulfonylamid ($C_{15}H_{17}F_6N_3O_4S_2$, 467,407 g/mol)

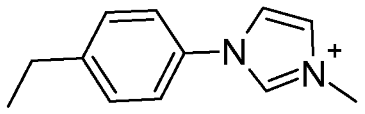 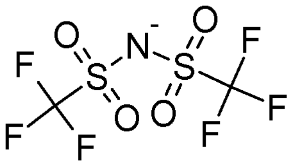

Es werden 4,0 g (0,013 mmol) 1-(4-Ethylphenyl)-3-methylimidazoliumiodid und 3,73 g (0,013 mmol) Lithiumbis(trifluoromethylsulfonyl)amid in 100 ml Wasser gelöst und mit 15 ml Dichlormethan versetzt. Die Reaktionsmischung wird für 2 Stunden bei Raumtemperatur gerührt und die organische Phase wird anschließend abgetrennt. Nach dem Entfernen des Lösungsmittels erhält man das flüssige Produkt in 87 % Ausbeute.

Thermische Stabilität: Zersetzungsbeginn: 330 °C, Wendepunkt: 455 °C
$^1$H-NMR (300 MHz, d$^6$-DMSO, ppm): 9.69 (1H, s, NCHN), 8.24 (1H, m, NCHC), 7.92 (1H, m, NCHC), 7.65 (2H, d, J=8.5 Hz, CH arom.), 7.49 (2H, d, J=8.5 Hz, CH arom.), 3.93 (3H, s, N-$CH_3$), 2.69 (2H, q, J=7.5 Hz, Ar-$CH_2$), 1.21 (3H, t, J=7.5 Hz, C-$CH_3$)
$^{13}$C-NMR (75.5 MHz, d$^6$-DMSO, ppm): 145.9 (C arom.), 135.8 (NCHN), 132.6 (C arom.), 129.4 (2CH), 124.4 (CH), 121.8 (2CH), 121.1 (CH), 36.1 (N-$CH_3$), 27.7 (Ar-$CH_2$), 15.3 ($CH_3$)
Elementaranalyse ($C_{15}H_{17}F_6N_3O_4S_2$)
berechnet: C 35.98%, H 3.23%, N 8.99%, S 13.72%
gefunden: C 36.07%, H 3.14%, N 9.20%, S 13.59%

<u>1-(4-Ethylphenyl)-3-butyl-1H-imidazoliumbis(trifluoromethyl)sulfonylimid</u> ($C_{17}H_{21}F_6N_3O_4S_2$, 509.487 g/mol)

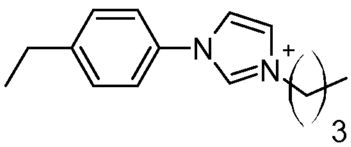 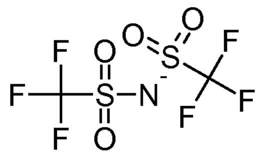

Man löst 3,15 g (8,84 mmol) 1-(4-Ethylphenyl)-3-butyl-1H-limidazoliumiodid und 3,05 g Lithiumbis(trifluoromethylsulfonyl)amid in 50 ml Wasser und setzt 10 ml Dichlormethan hinzu. Nach 20 Stunden Rühren bei Raumtemperatur wird die organische Phase abgetrennt und am Rotationsverdampfer eingeengt. Das flüssige Produkt wird in 100 % Ausbeute erhalten.

Thermische Stabilität: Zersetzungsbeginn: 324 °C, Wendepunkt: 450 °C
$^1$H-NMR (300 MHz, d$^6$-DMSO, ppm): 9.78 (1H, s, NCHN), 8.30 (1H, m, NCHC), 8.04 (1H, m, NCHC), 7.70 (2H, d, J=8.5 Hz, CH arom.), 7.51 (2H, d, J=8.5 Hz, CH arom.), 4.26 (2H, t, J=7.4 Hz, N-$CH_2$), 2.72 (2H, q, J=7.6 Hz, Ph-$CH_2$), 1.90 (2H, m, $CH_2$), 1.36 (2H, m, $CH_2$), 1.23 (3H, t, J=7.6 Hz, $CH_3$), 0.95 (3H, t, J=7.4 Hz, $CH_3$)
$^{13}$C-NMR (75.5 MHz, d$^6$-DMSO, ppm): 145.8 (C), 135.1 (NCHN), 132.6 (C), 129.3 (CH), 123.2 (CH), 121.8 (CH), 121.2 (CH),49.1 ($CH_2$), 31.1 ($CH_2$), 28.7 ($CH_2$), 18.8 ($CH_2$), 15.4 ($CH_3$), 13.2 ($CH_3$)
Elementaranalyse ($C_{17}H_{21}F_6N_3O_4S_2$)
berechnet: C 40.08 %, H 4.14 %, N 8.25 %, S 12.59 %
gefunden: C 40.43 %, H 4.37 %, N 8.42 %, S 12.37 %

<u>1-(4-Ethylphenyl)-3-hexyl-1H-imidazoliumbis(trifluoromethyl)sulfonylimid</u> ($C_{19}H_{25}F_6N_3O_4S_2$, 537.539 g/mol)

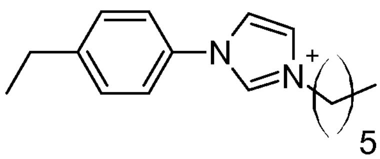 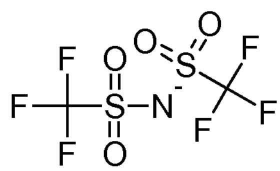

Man löst 6,38 g (0,017 mol) 1-(4-Ethylphenyl)-3-hexyl-1H-limidazoliumiodid und 5,72 g Lithiumbis(trifluoromethylsulfonyl)amid in 80 ml Wasser und setzt 25 ml Dichlormethan hinzu. Nach 20 Stunden Rühren bei Raumtemperatur wird die organische Phase abgetrennt und am Rotationsverdampfer eingeengt. Das flüssige Produkt wird in 86 % Ausbeute (7,9 g) erhalten.

$^1$H-NMR (300 MHz, $CDCl_3$, ppm): 9.78 (1H, s, NCHN), 8.29 (1H, s, NCHC), 8.04 (1H, s, NCHC), 7.70 (2H, d, J=8.3 Hz, Ar-H), 7.50 (2H, d, J=8.3 Hz, Ar-H), 4.25 (2H, t, J=7.4 Hz, N-$CH_2$), 2.72 (2H, q, J=7.6 Hz, Ar-$CH_2$), 1.91 (2H, m, $CH_2$), 1.33 (6 H, m, 3x$CH_2$), 1.23 (3H, t, J=7.6 Hz, $CH_3$), 0.89 (3H, m, $CH_3$)

$^{13}$C-NMR (75.5 MHz, $CDCl_3$, ppm): 145.8 (C), 135.1 (NCHN), 132.6 (C), 129.3 (2CH), 121.8 (CH), 121.6 (2CH), 121.2 (CH), 117.4 ($CF_3$), 49.4 (N-$CH_2$), 30.6 ($CH_2$), 29.1 ($CH_2$), 27.7 ($CH_2$), 25.2 ($CH_2$), 21.8 ($CH_2$), 15.4 ($CH_3$), 13.7 ($CH_3$)

Elementaranalyse ($C_{19}H_{25}F_6N_3O_4S_2$)

berechnet: C 42.45 %, H 4.69 %, N 7.82 %, S 11.93 %

gefunden: C 42.23 %, H 4.79 %, N 7.96 %, S 11.77 %

1-(4-Ethylphenyl)-3-undecyl-1H-imidazoliumbis(trifluoromethyl)sulfonylimid ($C_{24}H_{35}F_6N_3O_4S_2$, 607.673 g/mol)

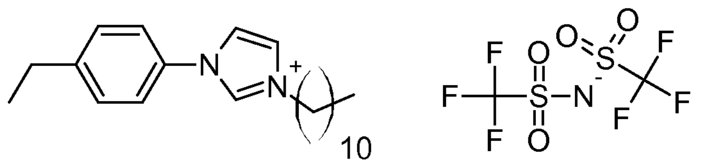

Man löst 2,27 g (0,005 mol) 1-(4-Ethylphenyl)-3-undecyl-1H-limidazoliumiodid und 1,72 g Lithiumbis(trifluoromethylsulfonyl)amid in 50 ml Wasser und setzt 10 ml Dichlormethan hinzu. Nach 20 h Rühren bei Raumtemperatur wird die organische Phase abgetrennt und am Rotationsverdampfer eingeengt. Das flüssige Produkt wird in 100 % Ausbeute erhalten.

Thermische Stabilität: Zersetzungsbeginn: 315 °C, Wendepunkt: 440 °C

$^1$H-NMR (300 MHz, $CDCl_3$, ppm): 8.98 (1H, s, NCHN), 7.57 (1H, m, NCHC), 7.48 (1H, m, NCHC), 7.41 (2H, d, J=8.5 Hz, arom. CH), 7.31 (2H, d, J=8.5 Hz, arom.

CH), 4.23 (2H, t, J=8.4 Hz, N-$CH_2$), 2.64 (2H, q, J=7.6 Hz, $C_{arom}$-$CH_2$), 1.86 (2H, m, $CH_2$), 1.21 (19H, m, $CH_3$, 8x$CH_2$), 0.79 (3H, m, $CH_3$)

$^{13}$C-NMR (75.5 MHz, $CDCl_3$, ppm): 147.5 (C), 133.7 (NCHN), 131.9 (C), 129.9 (CH), 123.2 (CH), 121.9 (CH), 121.7 (CH), 50.6 ($CH_2$), $CH_2$ 31.8, 30.1, 29.5 , 29.4 , 29.3, 29.2 , 28.8, 28.4, 26.1 , 22.6 , 15.2 ($CH_3$), 14.0 ($CH_3$)

Elementaranalyse ($C_{24}H_{35}F_6N_3O_4S_2 \cdot 0.5H_2O$)

berechnet: C 46.74 %, H 5.88 %, N 6.81 %, S 10.38 %

gefunden: C 46.73 %, H 5.95 %, N 7.27 %, S 9.91 %

1-(4-Ethylphenyl)-3-tetradecyl-1H-imidazoliumbis(trifluoromethyl)sulfonylimid ($C_{27}H_{41}F_6N_3O_4S_2$, 649.753 g/mol)

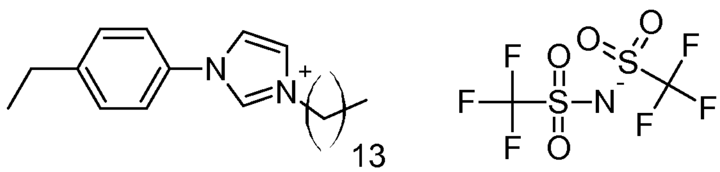

Man löst 2,25 g (5 mmol) 1-(4-Ethylphenyl)-3-tetradecyl-1H-limidazoliumbromid und 1,72 g Lithiumbis(trifluoromethylsulfonyl)amid in 50 ml Wasser-Methanol-Gemisch und setzt 10 ml Dichlormethan hinzu. Nach 20 Stunden Rühren bei Raumtemperatur wird die organische Phase abgetrennt und am Rotationsverdampfer eingeengt. Das flüssige Produkt wird in 100 % Ausbeute (3,27 g) erhalten.

$^1$H-NMR (300 MHz, $CDCl_3$, ppm): 8.97 (1H, s, NCHN), 7.57 (1H, m, NCHC), 7.48 (1H, m, NCHC), 7.41 (2H, d, J=8.6 Hz, CH arom.), 7.31 (2H, d, J=8.6 Hz, CH arom.), 4.22 (2H, t, J=7.6 Hz, N-$CH_2$), 2.64 (2H, q, J=7.7 Hz, $CH_2$), 1.86 (2H, m, $CH_2$), 1.21 (22H, m, 11x$CH_2$), 1.18 (3H, t, J=7.7 Hz, $CH_3$), 0.78 (3H, t, J=6.8 Hz, $CH_3$)

$^{13}$C-NMR (75.5 MHz, $CDCl_3$, ppm): 147.3 (C), 133.7 (NCHN), 132.0 (C), 129.9 (CH), 123.2 (CH), 121.9 (CH), 121.7 (CH), 50.6 ($CH_2$), 31.9 ($CH_2$), 30.1 ($CH_2$), 29.6 ($CH_2$), 29.5 ($CH_2$), 29.4 ($CH_2$), 29.3 ($CH_2$), 28.9 ($CH_2$), 28.4 ($CH_2$),26.1

($CH_2$), 22.6 ($CH_2$), 15.2 ($CH_3$), 14.0 ($CH_3$)
Elementaranalyse ($C_{27}H_{41}F_6N_3O_4S_2$) berechnet: C 49.91 %, H 6.36 %, N 6.47 %, S 9.87 %
gefunden: C 50.03 %, H 6.59 %, N 6.83 %, S 9.49 %

1-(2-Ethylphenyl)-3-methyl-1H-imidazoliumbis(trifluoromethyl)sulfonylamid ($C_{14}H_{15}F_6N_3O_4S_2$, 467.407 g/mol)

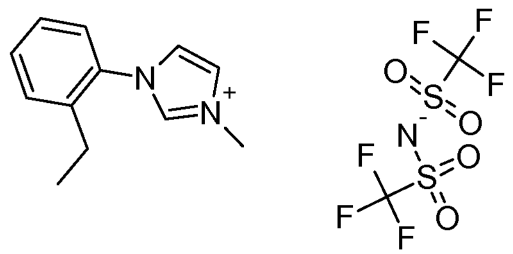

Es werden 17,5 g (0,056 mmol) 1-(2-Ethylphenyl)-3-methylimidazoliumiodid und 16 g (0,056 mmol) Lithiumbis(trifluoromethylsulfonyl)amid in 250 ml Wasser gelöst und mit 25 ml Dichlormethan versetzt. Die Reaktionsmischung wird für 2 Stunden bei Raumtemperatur gerührt und die organische Phase wird anschließend abgetrennt. Nach dem Entfernen des Lösungsmittels erhält man in 97 % Ausbeute eine ölige Flüssigkeit.
Thermische Stabilität: Zersetzungsbeginn: 255 °C, Wendepunkt: 460 °C
$^1$H-NMR (300 MHz, $d^6$-DMSO, ppm): 9.45 (1H, s, NCHN), 8.04 (1H, s, NCCH), 7.95 (1H, s, NCCH), 7.6 (2 H, m, CH arom.), 7.5 (3H, m, CH arom.), 2.5 (2H, q, C-$CH_2$), 1.09 (3H, t, $CH_3$)
$^{13}$C-NMR (75.5 MHz, $d^6$-DMSO, ppm): 139.4 (C arom.), 137.8 (NCHN), 133.7 (C arom.), 130.9 (CH), 129.8 (CH), 127.3 (CH), 126.9 (CH), 124.0 (CH), 123.9 (CH), 36.1 (N-$CH_3$), 23.0 (Ar-$CH_2$), 14.4 ($CH_3$)
Elementaranalyse ($C_{14}H_{15}F_6N_3O_4S_2$)
berechnet: C 35.98 %, H 3.23 %, N 8.99 %, S 13.72 %
gefunden: C 35.72 %, H 3.26 %, N 9.05 %, S 13.69 %

1-(2-Ethylphenyl)-3-butyl-1H-imidazoliumbis(trifluoromethyl)sulfonylimid ($C_{17}H_{21}F_6N_3O_4S_2$, 509.487 g/mol)

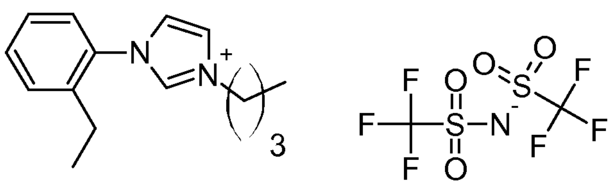

Man löst 0,68 g (1,91 mmol) 1-(2-Ethylphenyl)-3-butyl-1H-limidazoliumiodid und 0,55 g Lithiumbis(trifluoromethylsulfonyl)amid in 50 ml Wasser und setzt 10 ml Dichlormethan hinzu. Nach 24 Stunden Rühren bei Raumtemperatur wird die organische Phase abgetrennt und am Rotationsverdampfer eingeengt. Das flüssige Produkt (Schmelzpunkt 16 °C) wird in 100 % Ausbeute erhalten.
Thermische Stabilität: Zersetzungsbeginn: 295 °C, Wendepunkt: 440 °C
$^1$H-NMR (300 MHz, $d^6$-DMSO, ppm): 9.57 (1H, s, NCHN), 8.09 (1H, s, NCHC), 8.07 (1H, s, NCHC), 7.56 (4H, m, CH arom.), 4.29 (2H, t, J=7.4 Hz, N-$CH_2$), 2.50 (2H, q, J=7.6 Hz, Ph-$CH_2$), 1.91 (2H, m, $CH_2$), 1.34 (2H, m, $CH_2$), 1.10 (3H, t, J=7.6 Hz, $CH_3$), 0.96 (3H, t, J=7.4 (3H, t, J=7.4 Hz, $CH_3$)
$^{13}$C-NMR (75.5 MHz, $d^6$-DMSO, ppm): 139.3 (C), 137.1 (NCHN), 133.7 (C), 130.9 (CH), 129.8 (CH), 127.3 (CH), 126.9 (CH), 124.3 (CH), 122.8 (CH), 121.6 ($CF_3$), 117.4 ($CF_3$), 49.0 ($CH_2$), 31.1 ($CH_2$), 23.1 ($CH_2$), 18.8 ($CH_2$), 14.3 ($CH_3$), 13.2 ($CH_3$)
Elementaranalyse ($C_{17}H_{21}F_6N_3O_4S_2$)
berechnet: C 40.08 %, H 4.15 %, N 8.25 %, S 12.59 %
gefunden: C 40.34 %, H 4.36 %, N 8.48 %, S 12.26 %

1-(2-Ethylphenyl)-3-hexyl-1H-imidazoliumbis(trifluoromethyl)sulfonylimid ($C_{19}H_{25}F_6N_3O_4S_2$, 537.539 g/mol)

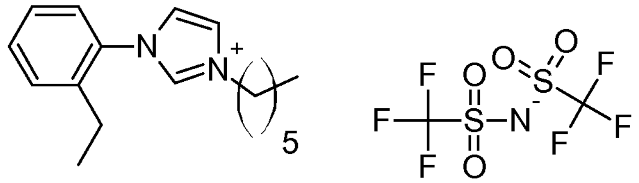

Man löst 6,38 g (0,017 mol) 1-(2-Ethylphenyl)-3-hexyl-1H-limidazoliumiodid und 5,72 g Lithiumbis(trifluoromethylsulfonyl)amid in 100 ml Wasser und setzt 25 ml Dichlormethan hinzu. Nach 1 Stunde Rühren bei Raumtemperatur wird die organische Phase abgetrennt und am Rotationsverdampfer eingeengt. Das flüssige Produkt wird in 86 % Ausbeute (7,9 g) erhalten.
$^1$H-NMR (300 MHz, $d^6$-DMSO, ppm): 9.57 (1H, s, NCHN), 8.09 (1H, m, NCHC), 8.07 (1H, m, NCHC), 7.56 (4H, m, CH arom.), 4.29 (2H, d, J=7.2 Hz, N-$CH_2$), 2.50 (2H, q, J=7.6 Hz, $CH_2$), 1.92 (2H, m, $CH_2$), 1.32 (6H, m, 3x$CH_2$), 1.90 (3H, t, J=7.6 Hz, $CH_3$), 0.89 (3H, m, $CH_3$)
$^{13}$C-NMR (75.5 MHz, $d^6$-DMSO, ppm): 139.3 (C), 137.1 (NCHN), 133.7 (C), 131.0 (CH), 129.8 (CH), 127.3 (CH), 126.9 (CH), 124.3 (CH), 122.8 (CH), 121.6 ($CF_3$), 117.4 ($CF_3$), 49.3 (N-$CH_2$), 30.5 ($CH_2$), 29.0 ($CH_2$), 25.1 ($CH_2$), 23.1 ($CH_2$), 21.9 ($CH_2$), 14.3 ($CH_3$), 13.7 ($CH_3$)
Elementaranalyse ($C_{19}H_{25}F_6N_3O_4S_2$)
berechnet: C 42.45 %, H 4.69 %, N 7.82 %, S 11.93 %
gefunden: C 42.67 %, H 4.88 %, N 7.96 %, S 11.84 %

1-(2-Ethylphenyl)-3-undecyl-1H-imidazoliumbis(trifluoromethyl)sulfonylimid ($C_{24}H_{35}F_6N_3O_4S_2$, 607.673 g/mol)

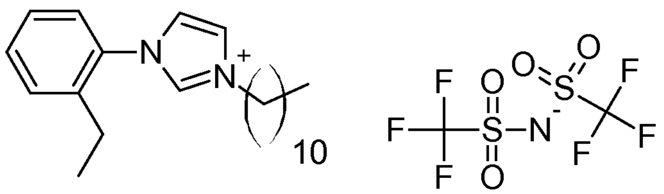

Man löst 1,095 g (2,41 mmol) 1-(2-Ethylphenyl)-3-undecyl-1H-limidazoliumiodid und 0,83 g Lithiumbis(trifluoromethylsulfonyl)amid in 60 ml Wasser und setzt 10 ml Dichlormethan hinzu. Nach 20 Stunden Rühren bei Raumtemperatur wird die organische Phase abgetrennt und am Rotationsverdampfer eingeengt. Das flüssige Produkt (Schmelzpunkt 22 °C) wird in 100 % Ausbeute erhalten.
Thermische Stabilität: Zersetzungsbeginn: 299 °C, Wendepunkt: 430 °C
$^1$H-NMR (300 MHz, $CDCl_3$, ppm): 8.73 ppm (1H, s, NCHN), 7.53 ppm (1H, s, NCHC), 7.47 ppm (1H, m), 7.36 ppm (1H, m), 7.26 ppm (3H, m), 4.25 ppm (2H, t, J=7.6 Hz, N-$CH_2$), 2.39 ppm (2H, q, J=7.6 Hz, Ar-$CH_2$), 1.86 ppm (2H, m, $CH_2$), 1.22 ppm (16H, m, 8x$CH_2$), 1.07 ppm (3H, t, J=7.6 Hz, $CH_3$), 0.80 ppm (3H, m, $CH_3$)
$^{13}$C-NMR (75,5 MHz, $CDCl_3$, ppm): 139.3 (C), 135.9 (NCHN), 132.9 (C), 131.5 (CH), 129.9 (CH), 127.6 (CH), 126.5 (CH), 124.2 (CH), 122.8 (CH), 50.5 ($CH_2$), 31.8 ($CH_2$), 30.0 ($CH_2$), 29.5 ($CH_2$), 29.4 ($CH_2$), 29.3 ($CH_2$), 29.2 ($CH_2$), 28.8 ($CH_2$),26.0 ($CH_2$), 23.5 ($CH_2$), 22.6 ($CH_2$), 14.4 ($CH_3$), 14.0 ($CH_3$)
Elementaranalyse ($C_{24}H_{35}F_6N_3O_4S_2$)
berechnet: C 47.44 %, H 5.81 %, N 7.02 %, S 10.55 %
gefunden: C 47.45 %, H 5.62 %, N 7.06 %, S 10.26 %

1-(2-Ethylphenyl)-3-tetradecyl-1H-imidazoliumbis(trifluoromethyl)sulfonylimid ($C_{27}H_{41}F_6N_3O_4S_1$, 649.753 g/mol)

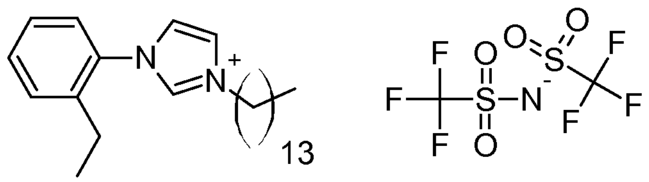

Man löst 2,25 g (5 mmol) 1-(2-Ethylphenyl)-3-tetradecyl-1H-limidazoliumbromid und 1,72 g Lithiumbis(trifluoromethylsulfonyl)amid in 50 ml Wasser-Methanol-Gemisch und setzt 10 ml Dichlormethan hinzu. Nach 20 Stunden Rühren bei Raumtemperatur wird die organische Phase abgetrennt und am Rotationsverdampfer eingeengt. Das flüssige Produkt wird in 100 % Ausbeute (3,27 g) erhalten.
$^1$H-NMR (300 MHz, $CDCl_3$, ppm): 8.72 (1H, s, NCHN), 7.52 (1H, m, NCHC), 7.46 (1H, m, CH arom.), 7.29 (4H, m, CH arom., NCHC), 4.24 (2H, t, J=7.6 Hz, $CH_2$), 2.38 (2H, q, J=7.6 Hz, $CH_2$), 1.86 (2H, m, $CH_2$), 1.20 (22H, m, 11x$CH_2$), 1.07 (3H, t, J=7.6 Hz, $CH_3$), 0.80 (3H, t, J=6.9 Hz, $CH_3$)
$^{13}$C-NMR (75.5 MHz, $CDCl_3$, ppm): 139.2 (C), 135.9 (NCHN), 132.9 (C), 131.5 (CH), 130.0 (CH), 127.6 (CH), 126.5 (CH), 124.2 (CH), 122.7 (CH), 50.5 ($CH_2$), 31.9 ($CH_2$), 30.0 ($CH_2$), 29.6 ($CH_2$), 29.5 ($CH_2$), 29.4 ($CH_2$), 29.3 ($CH_2$), 28.8 ($CH_2$), 26.0 ($CH_2$), 23.6 ($CH_2$), 22.6 ($CH_2$), 14.4 ($CH_3$), 14.1 ($CH_3$)
Elementaranalyse ($C_{27}H_{41}F_6N_3O_4S_2$)
berechnet: C 49.91 %, H 6.36 %, N 6.47 %, S 9.87 %
gefunden: C 49.67 %, H 6.18 %, N 6.64 %, S 9.51 %

1-(2-Bromphenyl)-3-methyl-1H-imidazoliumbis(trifluoromethyl)sulfonylamid ($C_{12}H_{10}BrF_6N_3O_4S_2$, 518.253 g/mol)

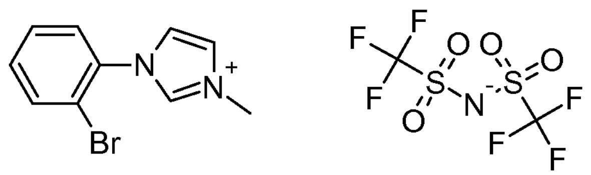

Es werden 1,534 g (4,23 mmol) 1-(2-Bromphenyl)-3-methyl-1H-imidazoliumiodid und 1,45 g Lithiumbis(trifluoromethylsulfonyl)amid in Wasser gelöst und mit Dichlormethan versetzt. Die Reaktionsmischung wird für 24 Stunden bei Raumtemperatur gerührt und die organische Phase wird anschließend abgetrennt. Nach dem Entfernen des Lösungsmittels erhält man das Produkt (Schmelzpunkt 15 °C) in 99 % Ausbeute.
Thermische Stabilität: Beginn der Zersetzung: 337 °C, Wendepunkt: 450 °C $^1$H-NMR (300 MHz, $d^6$-DMSO, ppm): 8.72 (1H, s, NCHN), 7.70 (1H, m, NCHC), 7.49 (2H, m), 7.43 (2H, m), 7.35 (1H, m), 3.98 (3H, s, N-$CH_3$)
$^{13}$C-NMR (75.5 MHz, $d^6$-DMSO, ppm): 136.7 (NCHN), 134.2 (CH), 133.3 (C), 132.8 (CH), 129.4 (CH), 128.2 (CH), 123.9 (CH), 118.8 (C), 36.8 ($CH_3$) Elementaranalyse ($C_{12}H_{10}BrF_6N_3O_4S_2$)
berechnet: C 27.81%, H 1.94%, N 8.11%, S 12.37%
gefunden: C 28.03%, H 1.70%, N 8.15%, S 12.31%

1-(2-Bromphenyl)-3-undecyl-1H-imidazoliumbis(trifluoromethyl)sulfonylamid ($C_{22}H_{30}BrF_6N_3O_4S_2$, 658.516 g/mol)

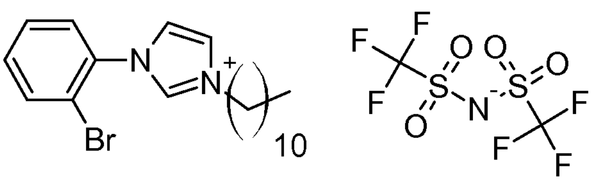

Es werden 4,91 g (9,7 mmol) 1-(2-Bromphenyl)-3-undecyl-1H-imidazoliumiodid und 3,07 g Lithiumbis(trifluoromethylsulfonyl)amid in einem Wasser-Methanol-Gemisch gelöst und mit Dichlormethan versetzt. Die Reaktionsmischung wird für 24 Stunden bei Raumtemperatur gerührt und die organische Phase wird anschließend abgetrennt. Nach dem Entfernen des Lösungsmittels erhält man das Produkt in 41 % Ausbeute (2,65 g).

$^{1}H$-NMR (300 MHz, $CDCl_3$, ppm): 8,79 (1H, s, NCHN), 7.71 (1H, dd, $J_1$=7,. Hz, $J_2$=1.5 Hz, NCHC), 7.52 (2H, m, CH arom.), 7.44 (1H, dd, $J_1$=14.7 Hz, $J_2$=1.51 Hz, NCHC), 7.44 (1H, m, CH arom.), 7.38 (1H, m, CH arom.), 4.26 (2H, t, J=7.6 Hz, N-$CH_2$), 1.88 (2H, m, $CH_2$), 1.22 (16H, m, 8x$CH_2$), 0.80 (3H, t, J=6.8 Hz, $CH_3$) $^{13}C$-NMR (75.5 MHz, $CDCl_3$, ppm): 144.3 (C-Br), 136.3 (NCHN), 134.2 (CH), 133.4 (C-N), 132.8 (CH), 129.5 (CH), 128.3 (CH), 124.2 (CH), 122.6 (CH), 50.8 (N-$CH_2$), ($CH_2$: 31.9, 29.9, 29.5, 29.4, 29.3, 28.3, 28.8, 26.0, 22.7), 14.1 ($CH_3$)

1-(2-Bromphenyl)-3-tetradecyl-1H-imidazoliumbis(trifluoromethyl)sulfonylamid ($C_{25}H_{36}BrF_6N_3O_4S_2$, 700.595 g/mol)

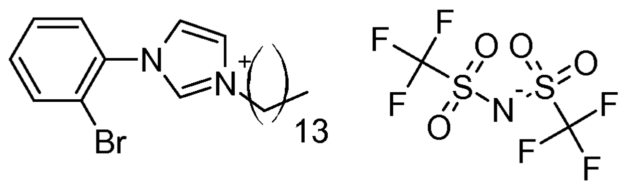

Es werden 8,3 g (0,015 mol) 1-(4-Bromphenyl)-3-tetradecyl-1H-imidazoliumbromid und 4,79 g Lithiumbis(trifluoromethylsulfonyl)amid in einem Wasser-Methanol-Gemisch gelöst und mit Dichlormethan versetzt. Die Reaktionsmischung wird für 24 Stunden bei Raumtemperatur gerührt und die organische Phase wird anschließend abgetrennt. Nach dem Entfernen des Lösungsmittels erhält man das Produkt in 99 % Ausbeute (10,37 g).
$^{1}H$-NMR (300 MHz, $CDCl_3$, ppm): 8.79 (1H, s, NCHN), 7.71 (1H, dd, $J_1$=9.3 Hz, $J_2$=1.5 Hz, NCHC), 7.51 (2H, m, CH arom.), 7.44 (1H, m, CH arom.), 7.44 (1H, dd, $J_1$=17.2 Hz, $J_2$=1.5 Hz, NCHC), 4.26 (2H, t, J=7.4 Hz, N-$CH_2$), 1.87 (2H, m, $CH_2$), 1.24 (22H, m, 11x$CH_2$), 0.80 (3H, t, J=6.9 Hz, $CH_3$),
$^{13}C$-NMR (75.5 MHz, $CDCl_3$, ppm): 144.3 (C-Br), 136.2 (NCHN), 134.1 (CH), 133.4 (C-N), 132.8 (CH), 129.4 (CH), 128.3 (CH), 124.1 (CH), 122.6 (CH), 50.7 (N-$CH_2$), ($CH_2$: 31.9, 29.9, 29.6, 29.5, 29.4, 29.3, 28.8, 25.9, 22.6), 14.1 ($CH_3$)

1-(4-Chlorphenyl)-3-butyl-1H-imidazoliumbis(trifluoromethyl)sulfonylamid ($C_{15}H_{16}ClF_6N_3O_4S_2$, 515, 879, g/mol)

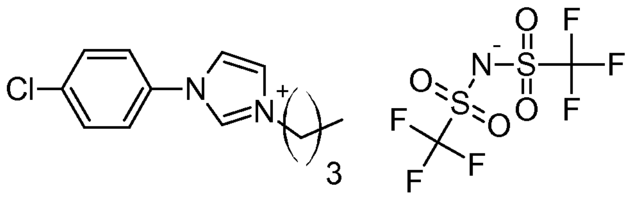

Es werden 2,96 g (8.2 mmol) 1-(4-Chlorphenyl)-3-butyl-1H-imidazoliumiodid und 2,58 g Lithiumbis(trifluoromethylsulfonyl)amid in einem Wasser-Methanol-Gemisch gelöst. Die Reaktionsmischung wird für 2 Tage bei Raumtemperatur gerührt und anschließend zur besseren Phasentrennung mit Dichlormethan versetzt. Die organische Phase wird abgetrennt. Nach dem Entfernen des Lösungsmittels erhält man eine ölige Flüssigkeit (96 % Ausbeute).
$^{1}H$-NMR (300 MHz, $CDCl_3$, ppm): 8.99 (1H, s, NCHN), 7.61 (1H, s, NCHC), 7.47 (5H, m, NCHC, CH arom.), 4.21 (2H, t, J=7.6 Hz, N-$CH_2$), 1.84 (2H, m, $CH_2$), 1.32 (2H, m, $CH_2$), 0.89 (3H, t, J=7.4 Hz, $CH_3$)
$^{13}C$-NMR (75.5 MHz, $CDCl_3$): 136.6 (C-Cl), 133.9 (NCHN), 132.7 (C-N), 123.5 (CH), 121.8 (CH), 50.4 (N-$CH_2$), 31.8 ($CH_2$), 19.3 ($CH_2$), 13.1 ($CH_3$) Elementaranalyse ($C_{15}H_{16}ClF_6N_3O_4S_2$)
berechnet: C 34.92 %, H 3.13 %, N 8.15 %, S 12.43 %
gefunden: C 34.85 %, H 3.20 %, N 8.36 %, S 12.63 %

1-(4-Chlorphenyl)-3-hexyl-1H-imidazoliumbis(trifluoromethyl)sulfonylamid ($C_{17}H_{20}ClF_6N_3O_4S_2$, 543.932 g/mol)

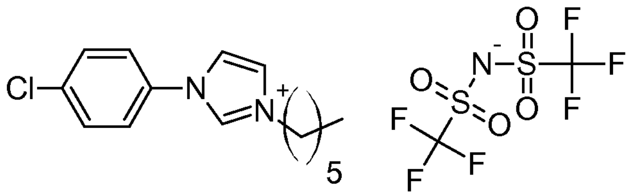

Es werden 2,80 g (7,2 mmol) 1-(4-Chlorphenyl)-3-hexyl-1H-imidazoliumiodid und 2,26 g Lithiumbis(trifluoromethylsulfonyl)amid in einem Wasser-Methanol-Gemisch gelöst. Die Reaktionsmischung wird für 2 Tage bei Raumtemperatur gerührt und anschließend zur besseren Phasentrennung mit Dichlormethan versetzt. Die organische Phase wird abgetrennt. Nach dem Entfernen des Lösungsmittels erhält man eine ölige Flüssigkeit (95 % Ausbeute).
$^1$H-NMR (300 MHz, d$^6$-DMSO, ppm): 9.83 (1H, s, NCHN), 8.33 (1H, m, NCHC), 8.05 (1H, m, NCHC), 7.84 (2H, d, J=7 Hz, Ar-H), 7.77 (2H, d, J=7 Hz, Ar-H), 4.25 (2H, t, J=7.1 Hz, N-$CH_2$), 1.89 (2H, m, $CH_2$), 1.33 (3H, m, 3x$CH_2$), 0.89 (3H, t, J=6.6 Hz, $CH_3$)
$^{13}$C-NMR (75.5 MHz, d$^6$-DMSO, ppm): 134.6 (NCHN), 130.1 (2CH), 123.7 (2CH), 123.3 (CH), 121.9 (C), 121.6 (CH), 49.4 (N-$CH_2$), 30.6 ($CH_2$), 29.1 ($CH_2$), 25.2 ($CH_2$), 21.8 ($CH_2$), 13.8 ($CH_3$)
Elementaranalyse ($C_{17}H_{20}ClF_6N_3O_4S_2$)
berechnet: C 37.54 %, H 3.71 %, N 7.73 %, S 11.79 %
gefunden: C 37.19 %, H 3.13 %, N 7.69 %, S 12.43 %

1-(4-Chlorphenyl)-3-undecyl-1H-imidazoliumbis(trifluoromethyl)sulfonylamid ($C_{22}H_{30}ClF_6N_3O_4S_2$, 614.065 g/mol)

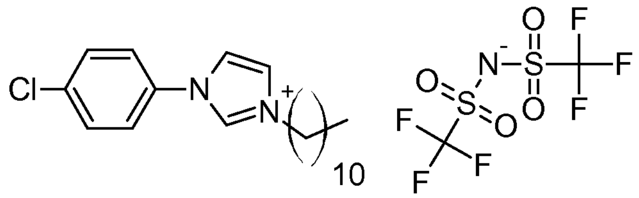

Es werden 1,04 g (2,3 mmol) 1-(4-Chlorphenyl)-3-undecyl-1H-imidazoliumiodid und 0,71 g Lithiumbis(trifluoromethylsulfonyl)amid in einem Wasser-Methanol-Gemisch gelöst. Die Reaktionsmischung wird für 2 Tage bei Raumtemperatur gerührt und anschließend zur besseren Phasentrennung mit Dichlormethan versetzt. Die organische Phase wird abgetrennt. Nach dem Entfernen des Lösungsmittels erhält man eine ölige Flüssigkeit (98 % Ausbeute).
$^1$H-NMR (300 MHz, $CDCl_3$, ppm): 9.03 (1H, s, NCHN), 7.61 (1H, m, NCHC), 7.48 (5H, m, NCHC+CH arom.), 4.22 (2H, t, J=7.7 Hz, N-$CH_2$), 1.86 (2H, m, $CH_2$), 1.22 (16H, m, 8x$CH_2$), 0.88 (3H, t, J=6.8 Hz, $CH_3$)
$^{13}$C-NMR (75.5 MHz, $CDCl_3$, ppm): 136.8 (C-Cl), 134.0 (NCHN), 132.7 (C-N), 130.8 (CH), 123.5 (CH), 123.4 (CH), 121.9 (CH), 50.8 (N-$CH_2$), ($CH_2$: 31.8, 30.0 ,29.5, 29.4, 29.3, 29.2, 28.8, 26.1, 22.6), 14.0 ($CH_3$)
Elementaranalyse ($C_{22}H_{30}ClF_6N_3O_4S_2$)
berechnet: C 43.03 %, H 4.92 %, N 6.84 %, S 10.44 %
gefunden: C 43.26 %, H 5.11 %, N 7.07 %, S 10.01 %

1-(2-Methoxy-4-nitrophenyl)-3-undecyl-1H-imidazoliumbis(trifluoromethyl)-sulfonylimid

($C_{23}H_{33}F_6N_3O_5S_2$, 654.643 g/mol)

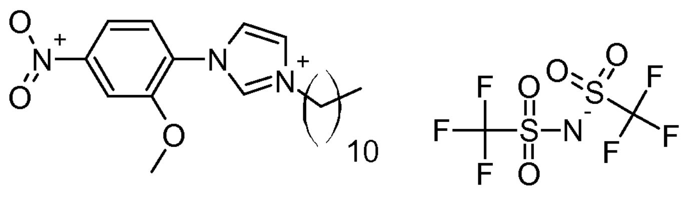

Man löst 2,61 g (5,21 mmol) 1-(2-Methoxy-4-nitrophenyl)-3-undecyl-1H-limidazoliumiodid und 1,79 g (6,25 mmol) Lithiumbis(trifluoromethylsulfonyl)amid in 60 ml eines Methanol-Wasser-Gemisches und setzt 10 ml Dichlormethan hinzu. Nach 20 Stunden Rühren bei Raumtemperatur wird die organische Phase abgetrennt und am Rotationsverdampfer eingeengt. Das flüssige Produkt wird in 93 % Ausbeute (3,15 g) erhalten.
$^1$H-NMR (300 MHz, $CDCl_3$, ppm): 9.09 (1H, s, NCHN), 7.88 (2H, s, NCHC), 7.67 (1H, d, J=8.12 Hz, CH arom.), 7.61 (1H, m, CH arom.), 7.48 (1H, m , CH arom.), 4.25 (2H, t, J=7.6 Hz, N-$CH_2$), 3.96 (3H, s, O-$CH_3$), 1.87 (2H, m, $CH_2$), 1.20 (16H, m, 8x$CH_2$), 0.79 (3H, t, J=7.0 Hz, $CH_3$)
$^{13}$C-NMR (75.5 MHz, $CDCl_3$, ppm): 152.7 (C), 149.4 (C), 136.3 (CH), 127.8 (C), 126.6 (CH), 123.5 (CH), 122.4 (CH), 108.0 (CH), 57.1 (O-$CH_3$), 50.7 (N-$CH_2$), 31.8 ($CH_2$), 29.9 ($CH_2$), 29.4 ($CH_2$), 29.3 ($CH_2$), 29.2 ($CH_2$), 28.8 ($CH_2$), 26.0 ($CH_2$), 22.6 ($CH_2$), 14.0 ($CH_3$)
Elementaranalyse ($C_{23}H_{33}F_6N_3O_5S_2 \cdot 0.485H_2O$)
berechnet: C 41.64 %, H 5.01 %, N 8.45 %, S 9.65 %
gefunden: C 41.16 %, H 4.14 %, N 9.15 %, S 9.42 %

## Patentansprüche

1. Verfahren zur Extraktion von Metallen aus wässrigen Phasen mittels Extraktion durch eine ionische Flüssigkeit, wobei

   (a) ionische Flüssigkeiten der allgemeinen Formel (I)

   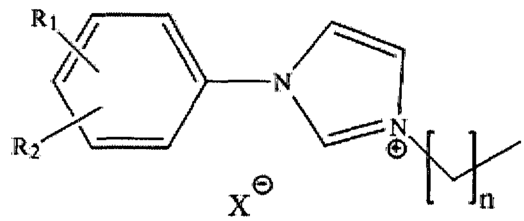

   (I)

   eingesetzt werden, wobei

   i) X- ein Anion,
   ii) n eine Zahl von 0 bis 14,
   iii) $R^1$ und $R^2$ unabhängig voneinander -H, -Halogen, -$NO_2$, -$NH_2$,-$NHR_x$, -$N(R_x)_2$, -$R_x$, -C(O)OH, -C(O)O$R_x$, -C(O)$R_x$ und -O$R_x$ sind, wobei $R_x$ ein geradkettiger oder verzweigter, gegebenenfalls substituierter C1 bis C 18 Alkylrest ist;

   (b) keine zusätzlichen Extraktionsmittel verwendet werden und
   (c) der pH-Wert der wässrigen Phase zwischen 8 und 0 ist und wobei das zu extrahierende Metall aus der Gruppe der Schwermetalle, der Gruppe der Seltenen Erden und/oder der Gruppe der Actinoide ausgewählt ist.

2. Verfahren gemäß Anspruch 1, wobei X- Bis(trifluormethylsulfonyl)-imid oder Dicyanamid ist.

3. Verfahren gemäß Anspruch 1 oder 2, wobei n = 5 bis 13 und vorzugsweise 10 ist.

4. Verfahren gemäß einem der Ansprüche 1 bis 3, wobei $R^1$ -H ist und $R^2$ ausgewählt aus der Gruppe, die -H, -Halogen, -$NO_2$, -$NH_2$, -$NHR_x$, -$N(R_x)_2$, -$R_x$, - C(O)OH, -C(O)O$R_x$, -C(O)$R_x$ und -O$R_x$ umfasst, wobei $R_x$ ein geradkettiger oder verzweigter, gegebenenfalls substituierter C1 bis C 18 Alkylrest ist und vorzugsweise die para-Position einnimmt.

5. Verfahren gemäß einem der Ansprüche 1 bis 4, wobei $R^1$ und/oder $R^2$ Reste mit +M-Effekt sind.

6. Verfahren gemäß Anspruch 5, wobei $R^2$ -Halogen, vorzugsweise Br, oder -O$R_x$ ist, wobei $R_x$ ein geradkettiger oder verzweigter, gegebenenfalls substituierter C1 bis C 18 Alkylrest und vorzugsweise Methyl oder Ethyl ist.

7. Verfahren gemäß einem der Ansprüche 1 bis 6, wobei das zu extrahierende Metall Platin und/oder Europium ist.

8. Verfahren gemäß einem der Ansprüche 1 bis 7, wobei das Verfahren im pH-Bereich zwischen 8 und 0, zwischen 5 und 0, zwischen 3 und 0 und vorzugsweise zwischen 2 und 0 durchgeführt wird.

**9.** Verfahren gemäß einem der Ansprüche 1 bis 8, wobei das Extraktionsverhältnis über den gesamten pH-Bereich um nicht mehr als 60 %, 50 %, 40 %, 35 % oder 30 % und vorzugsweise um nicht mehr als 30 % abnimmt.

**10.** Verwendung einer ionischen Flüssigkeit der allgemeinen Formel (I),

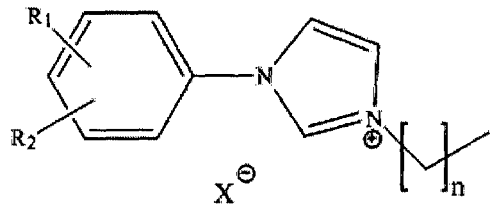

(I)

wobei

i) X- ein Anion,
ii) n eine Zahl von 0 bis 14,
iii) $R^1$ und $R^2$ unabhängig voneinander -H, -Halogen, $-NO_2$, $-NH_2$,$-NHR_x$, $-N(R_x)_2$, $-R_x$, -C(O)OH, $-C(O)OR_x$, $-C(O)R_x$ und $-OR_x$ sind,

wobei $R_x$ ein geradkettiger oder verzweigter, gegebenenfalls substituierter C1 bis C18 Alkylrest ist, zur Extraktion wenigstens eines Metalls aus einer wässrigen Phase und wobei das zu extrahierende Metall aus der Gruppe der Schwermetalle, der Gruppe der Seltenen Erden und/oder der Gruppe der Gruppe der Actinoide ausgewählt ist.

**11.** Verwendung einer ionischen Flüssigkeit gemäß Anspruch 10, wobei das zu extrahierende Metall Platin und/oder Europium ist.

**12.** Verwendung einer ionischen Flüssigkeit gemäß Anspruch 10 zur selektiven Extraktion wenigstens eines Metalls aus einem Gemisch aus wenigstens zwei Metallen in wässriger Phase.

**Claims**

**1.** Process for the extraction of metals from aqueous phases by means of extraction by an ionic liquid, wherein

(a) ionic liquids of general formula (I)

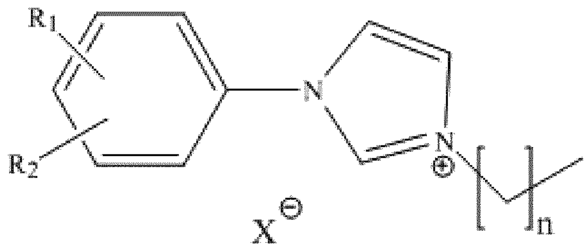

(I)

are used, wherein

i) $X^-$ is an anion,
ii) n is a number from 0 to 14,
iii) $R^1$ and $R^2$ independently from each other are -H, -halogen, $-NO_2$,

$-NH_2$, $-NHR_x$, $-N(R_x)_2$, $-R_x$, -C(O)OH, $-C(O)OR_x$, $-C(O)R_x$ and $-OR_x$, wherein $R_x$ is a straight-chained or branched, optionally substituted C1 to C18 alkyl group;
(b) no additional extracting agents are used and
(c) the pH value of the aqueous phase is between 8 and 0 and wherein the metal to be extracted is selected from the group of heavy metals, the group of rare earths and/or the group of actinides.

2. Process according to claim 1, wherein $X^-$ is bis(trifluoromethylsulfonyl)-imide or dicyanamide.

3. Process according to claim 1 or 2, wherein n = 5 to 13 and preferably is 10.

4. Process according to any of claims 1 to 3, wherein $R^1$ is -H and $R^2$ is selected from the group comprising -H, -halogen, $-NO_2$, $-NH_2$, $-NHR_x$, $-N(R_x)_2$, $-R_x$, -C(O)OH, $-C(O)OR_x$, $-C(O)R_x$ and $-OR_x$, wherein $R_x$ is a straight-chained or branched, optionally substituted C1 to C18 alkyl group and preferably occupies the para position.

5. Process according to any of claims 1 to 4, wherein $R^1$ and/or $R^2$ are groups with a +M-effect.

6. Process according to claim 5, wherein $R^2$ is -halogen, preferably Br, or $-OR_x$, wherein $R_x$ is a straight-chained or branched, optionally substituted C1 to C18 alkyl group and preferably is methyl or ethyl.

7. Process according to any of claims 1 to 6, wherein the metal to be extracted is platinum and/or europium.

8. Process according to any of claims 1 to 7, wherein the process is carried out in a pH range of between 8 and 0, between 5 and 0, between 3 and 0 and preferably between 2 and 0.

9. Process according to any of claims 1 to 8, wherein the extraction ratio does not decrease by more than 60%, 50%, 40%, 35% or 30% and preferably by not more than 30% over the whole pH range.

10. Use of an ionic liquid of general formula (I),

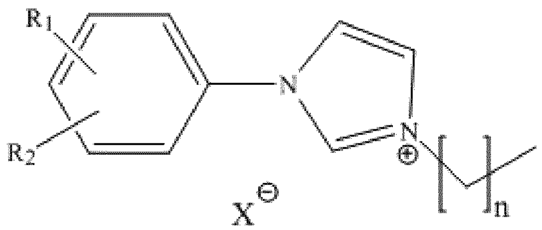

(I)

wherein

i) $X^-$ is an anion,
ii) n is a number from 0 to 14,
iii) $R^1$ and $R^2$ independently from each other are -H, -halogen, $-NO_2$,

$-NH_2$, $-NHR_x$, $-N(R_x)_2$, $-R_x$, -C(O)OH, $-C(O)OR_x$, $-C(O)R_x$ and $-OR_x$, wherein $R_x$ is a straight-chained or branched, optionally substituted C1 to C18 alkyl group,
for the extraction of at least one metal from an aqueous phase and wherein the metal to be extracted is selected from the group of heavy metals, the group of rare earths and/or the group of actinides.

11. Use of an ionic liquid according to claim 10, wherein the metal to be extracted is platinum and/or europium.

12. Use of an ionic liquid according to claim 10 for selective extraction of at least one metal from a mixture of at least two metals in an aqueous phase.

## Revendications

1. Procédé destiné à extraire des métaux de phases aqueuses au moyen d’une extraction par un liquide ionique, lors duquel

(a) on met en oeuvre des liquides ioniques de la formule générale (I)

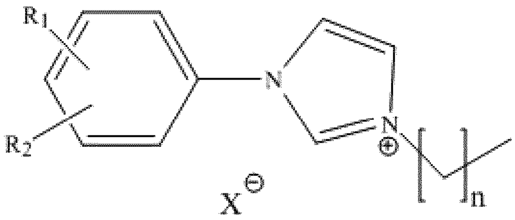

(I)

dans laquelle

i) $X^-$ est un anion,
ii) n est un nombre de 0 à 14,
iii) $R^1$ et $R^2$ sont, indépendamment l'un de l'autre -H, -halogène, $-NO_2$,

$-NH_2$, $-NHR_x$, $-N(R_x)_2$, $-R_x$, -C(O)OH, $-C(O)OR_x$, $-C(O)R_x$ et $-OR_x$, sachant que $R_x$ est un radical alkyle en C1 à C18 en chaîne linéaire ou ramifié, le cas échéant substitué ;
(b) aucun produit d'extraction supplémentaire n'étant utilisé et
(c) la valeur pH de la phase aqueuse se situant entre 8 et 0, le métal qui doit être extrait étant choisi dans le groupe des métaux lourds, le groupe des terres rares et/ou le groupe des actinoïdes.

**2.** Procédé selon la revendication 1, $X^-$ étant un bis(trifluorométhylsulfonyle)imide ou un dicyanamide.

**3.** Procédé selon la revendication 1 ou la revendication 2, lors duquel n = de 5 à 13 et de préférence 10.

**4.** Procédé selon l'une quelconque des revendications 1 à 3, dans lequel $R^1$ est -H et $R^2$ est choisi dans le groupe qui comprend -H, -halogène, $-NO_2$, $-NH_2$, $-NHR_x$, $-N(R_x)_2$, $-R_x$, -C(O)OH, $-C(O)OR_x$, $-C(O)R_x$ et $-OR_x$, sachant que $R_x$ est un radical alkyle en C1 à C18 en chaîne linéaire ou ramifié, le cas échéant substitué et adopte de préférence la position para.

**5.** Procédé selon l'une quelconque des revendications 1 à 4, $R^1$ et/ou $R^2$ étant des radicaux avec effet +M.

**6.** Procédé selon la revendication 5, $R^2$ étant -halogène, de préférence du Br ou $-OR_x$, sachant que $R_x$ est un radical alkyle en C1 à C18 en chaîne linéaire ou ramifié, le cas échéant substitué et est de préférence du méthyle ou de l'éthyle.

**7.** Procédé selon l'une quelconque des revendications 1 à 6, le métal qui doit être extrait étant du platine et/ou de l'europium.

**8.** Procédé selon l'une quelconque des revendications 1 à 7, le procédé étant réalisé à un pH dans la plage comprise entre 8 et 0, entre 5 et 0, entre 3 et 0 et de préférence entre 2 et 0.

**9.** Procédé selon l'une quelconque des revendications 1 à 8, le rapport d'extraction sur l'ensemble de la plage du pH ne diminuant pas de plus de 60 %, 50 %, 40 %, 35 % et 30 % et de préférence pas de plus de 30 %.

**10.** Utilisation d'un liquide ionique de la formule générale (I),

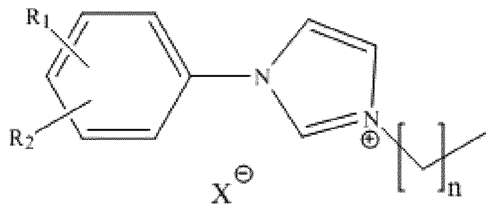

(I)

dans laquelle

i) $X^-$ est un anion,
ii) n est un nombre de 0 à 14,

iii) $R^1$ et $R^2$ sont, indépendamment l'un de l'autre -H, -halogène, $-NO_2$,

$-NH_2$, $-NHR_x$, $-N(R_x)_2$, $-R_x$, -C(O)OH, $-C(O)OR_x$, $-C(O)R_x$ et $-OR_x$, sachant que $R_x$ est un radical alkyle en C1 à C18 en chaîne linéaire ou ramifié, le cas échéant substitué,
pour l'extraction d'au moins un métal d'une phase liquide et le métal qui doit être extrait étant choisi dans le groupe des métaux lourds, le groupe des terres rares et/ou le groupe des actinoïdes.

**11.** Utilisation d'un liquide ionique selon la revendication 10, le métal qui doit être extrait étant du platine et/ou de l'europium.

**12.** Utilisation d'un liquide ionique selon la revendication 10 pour l'extraction sélective d'au moins un métal d'un mélange d'au moins deux métaux en phase aqueuse.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102005027172 A1
- WO 03070667 A1
- EP 1951934 A


### In der Beschreibung aufgeführte Nicht-Patentliteratur


- **S. DAI, Y. JU ; C. BARNES.** Solvent extraction of strontium nitrate by a crown ether using room-temperature ionic liquids. *J. Chem. Soc.,* 1999, 1201-1202
- **A. P. DE LOS RIOS et al.** Removal of Metal Ions from Aqueous Solutions by Extraction with Ionic Liquids. *J. Chem. Eng. Data,* 2010, vol. 55, 605-608
- Lanthanides and Actinides in Ionic Liquids. *Chem. Rev.,* 2007, vol. 107, 2592-2614
- **A. OUADI ; B. GADENNE ; P. HESEMANN et al.** Task-Specific Ionic Liquids Bearing 2-Hydroxybenzylamine Units: Synthesis and Americium-Extraction Studies. *Chem. Eur. J.,* 2006, vol. 12, 3074-3081
- **V. EGOROV ; D. DJIGAILO ; D. MOMOTENKO et al.** Task-specific ionic liquid trioctylammonium salicylate as extraction solvent for transition metal ions. *Talanta,* 2010, vol. 80, 1177-1182